# FASCICULE DE BREVET EUROPEEN

(11) **EP 2 839 731 B1**
(45) Date de publication et mention de la délivrance du brevet: **14.09.2016**
(21) Numéro de dépôt: 14175913.4
(22) Date de dépôt: 07.07.2014
(51) Int. Cl.: A01B 63/24, A01D 87/02, A01B 73/02

(54) **Machine de récolte de fourrage**
Futtererntemaschine
Crop harvesting machine

(30) Priorité: 17.07.2013 FR 1357004
(43) Date de publication de la demande: 25.02.2015
(73) Titulaire: KUHN S.A., 67700 Saverne (FR)
(72) Inventeur: Schwer, Michael, 57370 Bourscheid (FR); Wilhelm, Joël, 57820 Saint-Louis (FR)

(56) Documents cités:
- EP-A1- 0 715 804
- EP-A2- 0 900 515
- WO-A1-2011/112077
- US-B2- 8 186 138

## Description

La présente invention se rapporte à une machine agricole pour la récolte de végétaux, notamment de fourrage, cette machine étant déplaçable dans une direction d'avancement et comportant notamment :
- un châssis,
- au moins un bras support articulé au châssis et déplaçable par rapport au châssis entre une configuration de travail dans laquelle le bras support s'étend latéralement par rapport au châssis, et une configuration de transport dans laquelle le bras support est replié de sorte que son encombrement perpendiculairement à la direction d'avancement (A) est réduit,
- au moins un outil de travail comportant une extrémité latérale intérieure et une extrémité latérale extérieure, et pouvant occuper au moins une position de travail dans laquelle l'outil de travail agit sur des végétaux présents au sol, et au moins une autre position,
- un dispositif de liaison par l'intermédiaire duquel un bâti de l'outil de travail est relié au bras support, ce dispositif de liaison autorisant, au moins lorsque le bras support est dans la configuration de travail, un premier déplacement de l'outil de travail par rapport au bras support au cours duquel l'extrémité latérale intérieure et l'extrémité latérale extérieure de l'outil de travail se déplacent verticalement par rapport au bras support et dans la même direction verticale par rapport à celui-ci.

Une machine de ce type est connue du document US 8 186 138 B2. Cette machine est du type connu sous l'appellation de « Merger ». Cette machine comporte un châssis conçu pour être attelé à l'arrière d'un tracteur, et supporté au sol par des roues dans sa partie arrière. Sur au moins un côté latéral du châssis est articulé un bras support portant un outil de travail. Ce bras support peut être placé dans une configuration de travail dans laquelle l'outil de travail s'étend perpendiculairement à la direction d'avancement et sensiblement horizontalement. L'outil de travail comporte un rotor à dents qui, pendant le travail, s'étend perpendiculairement à la direction d'avancement et ramasse les végétaux présents au sol. Les végétaux ramassés sont déplacés vers l'arrière par le rotor, en direction d'un convoyeur à tapis qui déplace les végétaux perpendiculairement à la direction d'avancement, en direction d'un côté latéral de l'outil de travail. Sur la machine connue, l'outil de travail est, dans sa partie arrière, relié à un support au moyen d'un axe orienté horizontalement et parallèlement à la direction d'avancement lorsque le bras support est en configuration de travail. Ce support est à son tour relié au bras support au moyen d'une première bielle et d'une deuxième bielle située sous la première bielle. A chacune de ses extrémités, la première bielle est articulée au bras support et au support au moyen d'axes physiques respectifs qui sont orientés horizontalement et transversalement à la direction d'avancement lorsque le bras support se trouve en configuration de travail. Il résulte de cet agencement que les première et deuxième bielles peuvent se déplacer verticalement par rapport au bras support en configuration de travail, de sorte que l'outil de travail peut, dans son intégralité, se déplacer vers le haut ou bien vers le bas pour suivre un terrain au profil inégal. Cependant, ce déplacement est uniquement vertical. Le bras support étant en configuration de travail, la distance, mesurée horizontalement et perpendiculairement à la direction d'avancement, qui sépare l'outil de travail du châssis, demeure constante. Au cours de la période de récolte, les végétaux peuvent, consécutivement à leur fauchage, être regroupés en andains dont la largeur et l'espacement les uns des autres varient suivant les machines de fauchage et/ou d'andainage utilisées. Un cas d'utilisation de la machine connue consiste en ce que le tracteur et la machine chevauchent un premier andain, de sorte que ce premier andain passe entre les roues du tracteur et entre les roues de la machine, et en ce que l'outil de travail ramasse un deuxième andain parallèle au premier andain et placé sur un côté latéral du tracteur. Ce deuxième andain est déposé par la machine sur ou le long du premier andain, ou bien sur ou le long d'un troisième andain parallèle au deuxième andain et placé à plus grande distance du premier andain. En pareil cas d'utilisation, la trajectoire du tracteur et de la machine est imposée par le fait que leurs roues respectives ne doivent pas écraser le premier andain. Il se peut donc qu'en fonction de la largeur du deuxième andain, et de la distance qui le sépare du premier andain, ce deuxième andain ne soit repris que partiellement par l'outil de travail. Ce dernier laisse donc une fraction non ramassée du deuxième andain. Un ramassage complet du deuxième andain requiert donc un passage supplémentaire de la machine, ce qui augmente le temps passé au champ et les coûts d'exploitation, et réduit la productivité. En sus, le fait pour l'outil de travail de scinder le deuxième andain en deux parties, augmente le risque de bourrage de végétaux au sein de l'outil de travail. Par ailleurs, la manière dont le deuxième andain est redéposé sur ou le long du premier ou du troisième andain n'est pas modifiable, car elle est imposée par la distance séparant l'outil de travail du châssis dont les roues chevauchent le premier andain. Par conséquent, l'allure du nouvel andain, obtenu par le regroupement du deuxième andain et du premier ou du troisième andain, n'est pas toujours optimale suivant la nature des végétaux et les conditions météorologiques rencontrées. Enfin, la machine connue ne permet pas de modifier le positionnement transversal de l'outil de travail par rapport au tracteur. Par conséquent, il n'est notamment pas possible d'ajuster la largeur totale de l'ensemble tracteur - machine au travail.

Une autre machine connue du document WO 2011/112077 est conforme au préambule de la revendication 1. Sur cette machine, l'outil de travail est relié au bras support concerné au moyen d'un dispositif de liaison comprenant un premier bras et un deuxième bras. Le premier bras s'étend sensiblement dans la direction d'avancement, depuis un premier axe vertical d'articulation au bras support. A son extrémité distante du premier axe, le premier bras porte un deuxième bras au moyen d'un deuxième axe d'articulation s'étendant sensiblement dans la direction d'avancement. Ce deuxième bras s'étend transversalement à la direction d'avancement et porte, à son extrémité distante du deuxième axe, le bâti de l'outil de travail concerné. Par pivotement du deuxième bras autour du deuxième axe, l'outil de travail peut se déplacer verticalement. Par ailleurs, le deuxième bras est télescopique de manière à autoriser un déplacement transversal de l'outil de travail. Ce dispositif de liaison est complexe et encombrant du fait des premier et deuxième bras qui s'étendent dans des directions respectives différentes. En particulier, l'agencement télescopique du deuxième bras est compliqué et onéreux. Enfin, pendant le travail, le deuxième axe d'articulation est soumis à des sollicitations mécaniques considérables. Celles-ci proviennent d'une part du mouvement vertical du deuxième bras par rapport au premier. D'autre part, les efforts que les végétaux déplacés par la machine avançant dans le champ exercent sur l'outil de travail, génèrent un couple de torsion autour d'un axe vertical passant par le deuxième axe d'articulation. Ce couple est élevé en raison de la longueur importante du deuxième bras dirigé transversalement, ce qui peut entraîner une usure rapide du deuxième axe.

La présente invention a pour but de proposer une machine agricole pour la récolte de végétaux qui ne présente pas les inconvénients précités.

A cet effet, l'invention est caractérisée en ce que le dispositif de liaison comporte au moins un bras orienté essentiellement dans la direction d'avancement lorsque le bras support est en configuration de travail, que ce bras est articulé au bras support autour d'un premier axe qui est orienté transversalement à la direction d'avancement et sensiblement horizontalement lorsque le bras support est en configuration de travail, et que ce bras peut, par pivotement autour de ce premier axe, se déplacer verticalement par rapport au bras support en configuration de travail, de sorte que l'outil de travail puisse se déplacer verticalement par rapport audit bras support.

Grâce aux moyens dont le dispositif de liaison est pourvu, la distance, mesurée horizontalement et perpendiculairement à la direction d'avancement, qui sépare l'outil de travail du châssis, peut être ajustée aux différentes conditions de travail. Ainsi, le positionnement transversal de l'outil de travail par rapport au tracteur peut être modifié. De plus, il est possible d'ajuster la largeur totale de l'ensemble tracteur - machine au travail. Par le déplacement transversal de l'outil de travail par rapport au bras support qu'ils autorisent, les moyens permettent d'ajuster facilement la distance par rapport au châssis à laquelle les végétaux récoltés par l'outil de travail sont redéposés au sol par la machine, notamment sous la forme d'un andain. L'outil de travail de la machine, selon l'invention, peut notamment être destiné à andainer des végétaux au sol. Dans ce cas, lorsque le tracteur chevauche un premier andain qui passe entre ses roues, les moyens permettent de placer transversalement l'outil de travail à la distance adéquate du châssis pour reprendre, en totalité et en une fois, un deuxième andain placé sur un côté latéral du tracteur. En sus, ce deuxième andain peut être redéposé par la machine de manière optimale sur ou le long du premier andain, ou bien sur ou le long d'un troisième andain placé à plus grande distance du tracteur, afin d'obtenir un nouvel andain de plus gros volume. Les moyens permettent donc d'ajuster la largeur, la hauteur et la forme générale de ce nouvel andain en fonction de la nature des végétaux, des conditions météorologiques et de la capacité de traitement de la presse ou de l'ensileuse utilisée par la suite pour ramasser ce nouvel andain. Plus généralement, les moyens permettent un réglage aisé du recouvrement transversal entre les largeurs de travail, d'une part de l'outil de travail d'une machine selon l'invention attelée à l'arrière d'un tracteur, d'autre part d'une unité de travail placée à l'avant du tracteur. Cet avantage s'adresse bien entendu à un outil de travail et à une unité de travail du type précité, mais également à un outil de travail et à une unité de travail destinés à faucher des végétaux. Par ailleurs, comme les moyens permettent au deuxième déplacement d'être opéré indépendamment du premier déplacement vertical de l'outil de travail par rapport au bras support, le dispositif de liaison selon l'invention permet à l'outil de travail de bien suivre le terrain, quelle que soit la position transversale de l'outil de travail par rapport au châssis. Le suivi du terrain est avantageusement obtenu par le premier déplacement vertical de l'outil de travail par rapport au bras support. Au cours de ce premier déplacement, le bras support peut demeurer immobile ou au moins sensiblement immobile, si bien que les masses suspendues, en mouvement au cours du premier déplacement, sont avantageusement limitées aux masses respectives de l'outil de travail et du dispositif de liaison. Enfin, le dispositif de liaison regroupant les fonctions de déplacement vertical et de déplacement transversal de l'outil de travail par rapport au bras support, les moyens techniques pour articuler le bras support au châssis et pour assurer les déplacements du bras support par rapport au châssis, peuvent être simplifiés et allégés. Notamment, le bras support peut demeurer immobile, ou sensiblement immobile, par rapport au châssis lorsque ce bras support est dans la configuration de travail. En sus, le bras support peut être simplifié et allégé, en étant formé par une pièce d'un seul tenant qui n'intègre pas de liaisons articulées et/ou télescopiques.

Du fait que le dispositif de liaison du bâti de l'outil de travail au bras support, comporte un bras orienté essentiellement dans la direction d'avancement lorsque le bras support est en configuration de travail, le dispositif de liaison selon l'invention peut demeurer compact et léger. Cette compacité va de pair avec un bon suivi du terrain puisqu'au travail, le bras peut se déplacer verticalement par rapport au bras support, autour du premier axe transversal et sensiblement horizontal par lequel le bras est articulé au bras support. L'orientation longitudinale du bras et l'orientation transversale du premier axe permettent à ces éléments de bien résister aux efforts longitudinaux exercés sur l'outil de travail par les végétaux déplacés. Ainsi, le dispositif de liaison selon l'invention, reliant le bâti de l'outil de travail au bras support, présente une durabilité améliorée.

Selon une caractéristique avantageuse de l'invention, les moyens comportent un premier actionneur qui permet de déplacer l'outil de travail par rapport au bras support, transversalement à la direction d'avancement, entre une première position transversale par rapport au bras support, dans laquelle l'extrémité latérale intérieure de l'outil de travail est rapprochée d'un premier plan vertical médian du châssis, et une deuxième position transversale par rapport au bras support, dans laquelle cette extrémité latérale intérieure est éloignée de ce premier plan vertical médian. Dans la première position transversale de l'outil de travail, la largeur de la machine est réduite. Lorsque la machine est du type attelée à l'arrière d'un tracteur, l'extrémité latérale intérieure de l'outil de travail placé dans cette première position transversale, se situe dans le prolongement de l'essieu arrière du tracteur. L'outil de travail peut alors agir sur des végétaux présents au sol et situés à l'arrière du tracteur. Dans le cas d'un outil de travail destiné à la mise en andains de végétaux, l'outil de travail peut alors reprendre un andain passant entre les roues du tracteur pour, par exemple, le déplacer en direction de l'extrémité latérale extérieure de l'outil de travail. Dans la deuxième position transversale de l'outil de travail, l'extrémité latérale intérieure est par exemple située sensiblement dans le prolongement de la roue arrière du tracteur située du même côté que celui où l'outil de travail s'étend par rapport au châssis de la machine. Cet outil de travail peut ainsi agir sur des végétaux situés de ce côté du tracteur, qu'il s'agisse d'un outil de travail destiné à andainer ou à faucher ces végétaux. Notamment dans le cas d'un outil de travail destiné à andainer des végétaux, celui-ci peut ramasser un andain latéral placé de ce côté-ci du tracteur, afin de le redéposer sous la forme d'un andain, par exemple plus ou moins au centre de la machine. Un outil de travail destiné à faucher peut, dans cette deuxième position transversale, faucher des végétaux présents dudit côté du tracteur et les regrouper en un andain latéral ou plus ou moins central par rapport à la machine. Dans la deuxième position transversale, l'outil de travail peut présenter un certain recouvrement avec une unité de travail placée à l'avant du tracteur.

Selon une caractéristique avantageuse de l'invention, la machine comporte deux outils de travail articulés chacun au châssis au moyen d'un bras support respectif situé d'un côté respectif du châssis. Les moyens pour déplacer chaque outil de travail autorisent ainsi un réglage de la largeur totale de travail de la machine. En sus, les moyens permettent d'espacer plus ou moins ces outils de travail l'un de l'autre en vue d'ajuster la largeur d'un andain formé au centre de la machine par l'un au moins de ces outils de travail. De plus, les moyens autorisent un réglage du recouvrement entre les largeurs de travail respectives des outils de travail d'une machine selon l'invention attelée à l'arrière d'un tracteur, et la largeur de travail d'une unité de travail placée à l'avant du tracteur.

Selon une autre caractéristique avantageuse de l'invention, lorsque chaque bras support se trouve dans sa configuration de travail respective et que l'un au moins des outils de travail se trouve dans la deuxième position transversale par rapport au bras support correspondant, les extrémités latérales intérieures de ces outils de travail sont nettement écartées l'une de l'autre perpendiculairement à la direction d'avancement (A), et que, lorsque chaque bras support se trouve dans sa configuration de travail respective et que chaque outil de travail se trouve dans la première position transversale par rapport au bras support correspondant, les extrémités latérales intérieures de ces outils de travail sont juxtaposées. La première position transversale permet à la machine d'agir sur une largeur continue de végétaux. Des outils de travail destinés à andainer peuvent ainsi ramasser une largeur continue de végétaux, par exemple de végétaux fauchés ou fanés étalés au sol, et les déposer en un andain du côté gauche ou droit de la machine. La deuxième position transversale autorise chaque outil de travail à agir sur des végétaux répartis sur la gauche et sur la droite de la machine. Des outils de travail destinés à andainer peuvent ainsi former un andain central déposé entre les deux outils de travail, à partir de végétaux ramassés par chaque outil de travail respectif, par exemple à partir de deux andains latéraux qui sont chacun repris par un outil de travail respectif.

D'autres caractéristiques et avantages de l'invention ressortiront de la description ci-après avec référence aux figures annexées qui représentent une forme non limitative de réalisation de la machine selon l'invention.Sur ces figures
- la figure 1 représente une vue partielle, en perspective, d'une forme de réalisation d'une machine selon l'invention, comportant quelques coupes partielles ;
- la figure 2 est un agrandissement de la vue de la figure 1 ;
- la figure 3 représente une vue de dessus de la forme de réalisation de la figure 1, comportant quelques coupes partielles ;
- la figure 4 représente une vue de dessus de la forme de réalisation de la figure 1, comportant quelques coupes partielles ;
- la figure 5 représente une vue de côté de la forme de réalisation de la figure 1, attelée à un tracteur, comportant quelques coupes partielles ;
- la figure 6 représente une autre vue de côté de la forme de réalisation de la figure 1 ;
- les figures 7 à 9 représentent chacune une vue de face de la forme de réalisation de la figure 1, comportant quelques coupes partielles.

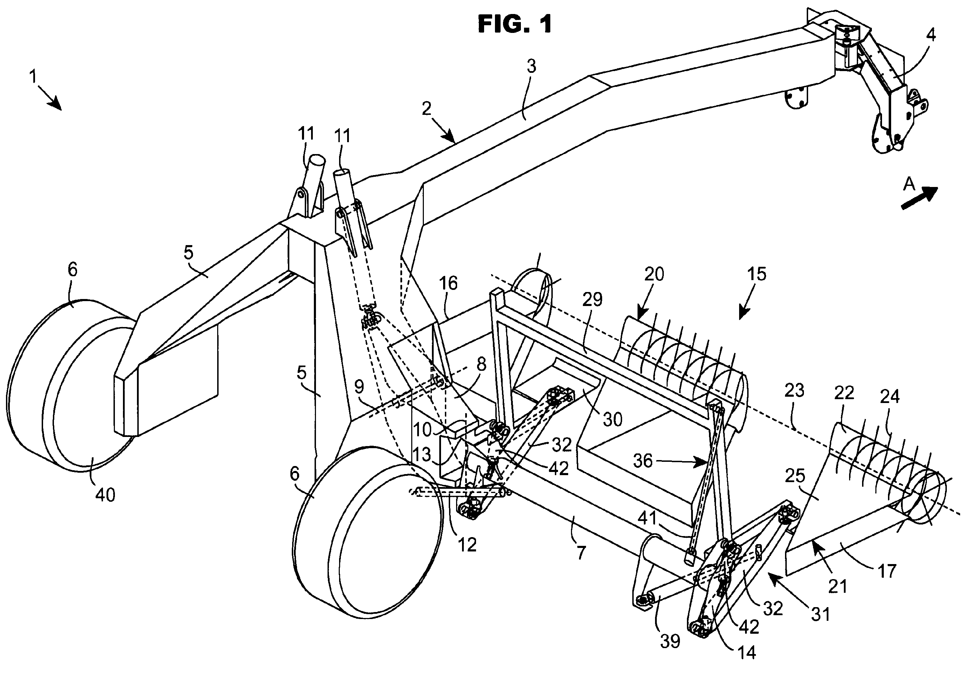

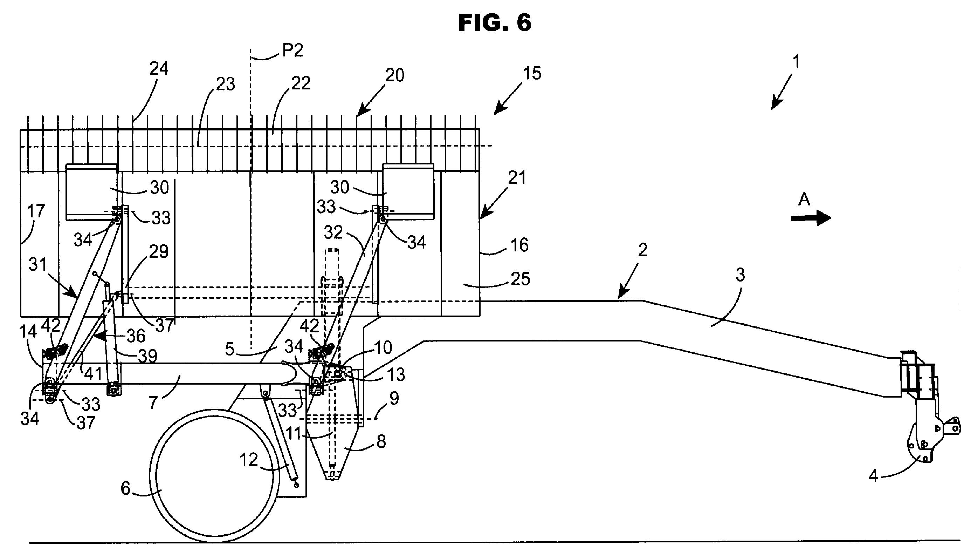

La machine (1) selon l'invention est une machine agricole pour la récolte de végétaux, en particulier de fourrage. Cette machine (1) comporte un châssis (2). Ainsi qu'il apparaît à la figure 1, celui-ci comprend une poutre centrale (3) qui possède à son extrémité avant un dispositif d'attelage (4) pour l'accrocher à un tracteur (T) permettant de déplacer la machine dans une direction d'avancement (A). Dans la suite de la description, les notions « avant », « arrière », « en aval », « gauche » et « droite » sont définies par rapport à la direction d'avancement (A), tandis que les notions « haut », « dessus », « inférieur », « supérieur » et « sous » se rapportent au sol. La poutre centrale (3) s'étend suivant la direction d'avancement (A). Dans sa partie arrière, la poutre centrale (3) porte des montants latéraux (5) qui s'étendent en direction du sol. Le châssis (2) est supporté au sol par des roues (6). Chaque roue (6) est portée par un montant latéral (5) respectif. Au châssis (2) est articulé au moins un bras support (7) qui est porté par un montant latéral (5). Le bras support (7) est relié à ce montant latéral (5) via un élément d'articulation (8). Cet élément d'articulation (8) est articulé au montant latéral (5) au moyen d'un premier axe d'articulation (9). Cet élément d'articulation (8) est disposé en avant des roues (6). Ce premier axe d'articulation (9) s'étend sensiblement dans la direction d'avancement (A). Ce premier axe d'articulation (9) est de plus sensiblement horizontal. Le bras support (7) est articulé à l'élément d'articulation (8) au moyen d'un deuxième axe d'articulation (10) sensiblement vertical lorsque la machine travaille. Ce deuxième axe d'articulation (10) est sensiblement perpendiculaire au premier axe d'articulation (9). Un troisième actionneur (11) est disposé entre le bras support (7) et le châssis (2). Ce troisième actionneur (11), par exemple un vérin, est articulé au châssis (2) et à l'élément d'articulation (8) et permet de pivoter ce dernier autour du premier axe d'articulation (9). Une bielle (12) est par ailleurs articulée au châssis (2) et au bras support (7). Lorsque le troisième actionneur (11) est en position raccourcie, le deuxième axe d'articulation (10) est sensiblement vertical. Le bras support (7) s'étend alors dans une configuration de travail dans laquelle il s'étend latéralement par rapport au châssis (2). Cette configuration de travail du bras support (7) est notamment illustrée aux figures 1, 3 et 5. Le bras support (7) s'étend de plus en avant de la roue (6) portée par le montant latéral (5) auquel le bras support (7) est relié. Notamment, le bras support (7) est sensiblement perpendiculaire à la direction d'avancement (A). Il est de plus sensiblement horizontal. Lorsque le troisième actionneur (11) est actionné à l'allongement, il fait pivoter vers le haut l'élément d'articulation (8) autour du premier axe d'articulation (9). Simultanément, le bras support (7) pivote autour du deuxième axe d'articulation (10), en raison de la bielle (12) qui le relie au châssis (2). Le bras support (7) pivote alors, depuis sa configuration de travail, vers le haut et vers l'arrière par rapport au châssis (2). Lorsque le troisième actionneur (11) est complètement allongé, le bras support (7) est placé dans une configuration de transport. Cette configuration de transport du bras support (7) est illustrée à la figure 6. Dans cette configuration, le bras support (7) replié occupe un encombrement réduit suivant une direction perpendiculaire à la direction d'avancement (A). Cet encombrement réduit est notamment obtenu par le fait que le bras support (7) s'étend alors au-dessus de la roue (6) portée par le montant latéral (5) correspondant. De plus, le bras support (7) s'étend sensiblement dans la direction d'avancement (A). Il s'étend sensiblement à l'horizontale. Dans la configuration de transport, l'extrémité intérieure (13) du bras support (7) reliée à l'élément d'articulation (8), se situe en avant de la roue (6). L'extrémité extérieure (14) du bras support (7) distante de son extrémité intérieure (13), est placée en arrière de la roue (6). Cette cinématique de repliement du bras support (7) permet, pour le transport, à la fois une largeur réduite de la machine (1) et une bonne maniabilité grâce à un empattement réduit.

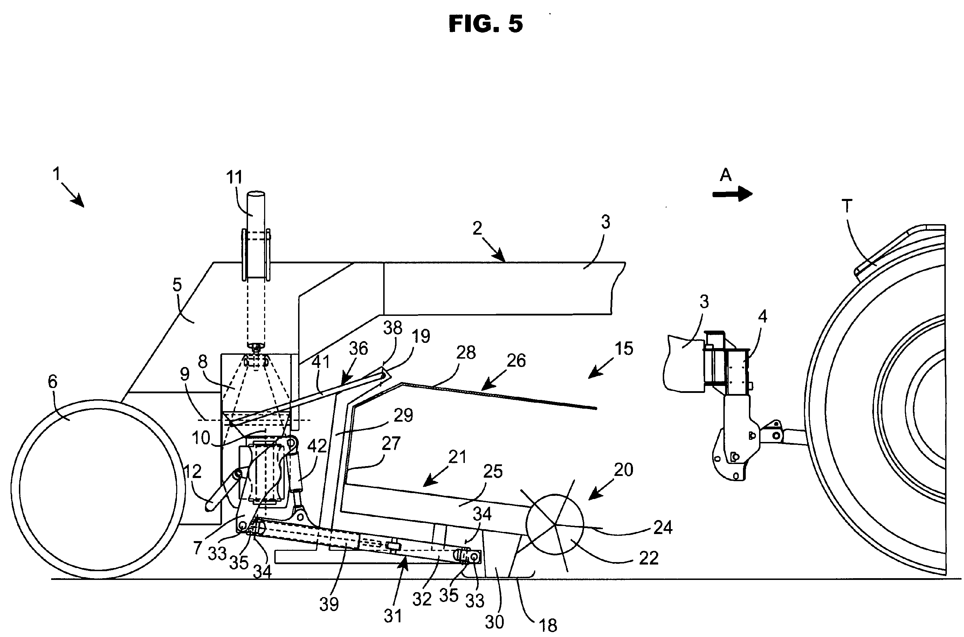

Le bras support (7) porte un outil de travail (15). Ce dernier comporte une extrémité latérale intérieure (16) et une extrémité latérale extérieure (17). Dans la configuration de travail du bras support (7), l'outil de travail (15) est latéralement, c'est-à-dire transversalement à la direction d'avancement (A), délimité par lesdites extrémités latérales (16 et 17). L'outil de travail (15) comporte également une extrémité verticale inférieure (18) et une extrémité verticale supérieure (19). Dans la configuration de travail du bras support (7), l'outil de travail (15) est verticalement délimité par lesdites extrémités verticales (18 et 19). Dans la configuration de travail du bras support (7), l'outil de travail (15) peut occuper au moins une position de travail dans laquelle l'outil de travail agit sur des végétaux présents au sol. Dans une telle position de travail illustrée à la figure 5, l'outil de travail (15) s'étend latéralement par rapport à la poutre centrale (3) du châssis (2). L'extrémité latérale intérieure (16) est plus proche de la poutre centrale (3) que ne l'est l'extrémité latérale extérieure (17). L'extrémité verticale inférieure (18) est proche ou située sensiblement au niveau du sol. Dans cette position de travail, l'outil de travail (15) s'étend transversalement à la direction d'avancement (A), notamment sensiblement perpendiculairement à celle-ci. L'outil de travail (15) s'étend de plus essentiellement dans un plan sensiblement horizontal. Il s'étend en avant du bras support (7). Le déplacement du bras support (7) entre sa configuration de travail et sa configuration de transport conduit à déplacer l'outil de travail (15) entre sa position de travail et une position de transport. Dans cette position de transport représentée à la figure 6, l'outil de travail (15) s'étend essentiellement dans un plan sensiblement parallèle à la direction d'avancement (A). Notamment, l'outil de travail (15) s'étend sensiblement à la verticale. Il s'étend au-dessus du bras support (7). L'extrémité latérale intérieure (16) de l'outil de travail (15) est placée en avant de la roue (6) correspondante, notamment en avant de l'extrémité intérieure (13) du bras support (7). L'extrémité latérale extérieure (17) de l'outil de travail (15) est placée en arrière de cette roue (6), notamment, vu depuis un côté latéral de la machine (1), sensiblement au même niveau que l'extrémité extérieure (14) du bras support (7). Dans la position de transport de l'outil de travail (15), son extrémité verticale inférieure (18) est apparente pour une personne se tenant du côté de la machine (1) où s'étend cet outil de travail (15). A l'inverse, l'extrémité verticale supérieure (19) de l'outil de travail (15) n'est pas visible car elle fait face à la poutre centrale (3) du châssis (2).

La machine (1) selon la forme de réalisation des figures est une machine de fenaison. Une machine de fenaison est notamment une andaineuse de végétaux présents au sol. Une machine de fenaison est notamment une machine du type connu sous l'appellation de « merger ». Dans la forme de réalisation des figures, l'outil de travail (15) comporte un dispositif de ramassage (20) de végétaux au sol et un dispositif de déplacement (21) placé en aval. Sur les figures 1, 2, 7, 8 et 9, le dispositif de ramassage (20) et le dispositif de déplacement (21) comportent quelques coupes partielles, de manière à rendre mieux visibles les autres éléments de la machine (1). Le dispositif de ramassage (20) comporte un rotor (22) pouvant tourner autour d'un axe de rotation (23) dans le sens antihoraire, vu depuis la droite du dispositif de ramassage (20). Dans la position de travail de l'outil de travail (15), le rotor (22) est animé autour de cet axe de rotation (23) qui s'étend transversalement à la direction d'avancement (A), notamment sensiblement perpendiculairement à celle-ci, et notamment sensiblement horizontalement. Le dispositif de ramassage (20) comporte également des dents (24) qui ramassent les végétaux au niveau du sol, les soulèvent et les projettent vers l'arrière. Ces dents (24) comportent des pointes de dents qui décrivent une enveloppe courbe lorsque les dents (24) sont animées. Le dispositif de ramassage (20) est en mesure de ramasser des végétaux regroupés au sol en andains, ou encore étalés au sol sous la forme de végétaux fauchés, fanés ou pré-fanés. Le dispositif de ramassage (20) est, par exemple, du type connu sous l'appellation de « pick-up », dont les dents (24) sont portées par le rotor (22) et émergent d'une multitude de lames courbées autour du rotor (22) et placées les unes à côté des autres suivant l'axe de rotation (23). Les dents (24) se déplacent entre ces lames. Les dents (24) sont commandées de telle sorte qu'elles libèrent progressivement les végétaux qui approchent du dispositif de déplacement (21). A cet effet, le dispositif de ramassage (20) comporte, par exemple, un chemin de came fixe à l'intérieur duquel se déplacent des galets portés par des cames reliées aux dents (24). Alternativement, des dents (24) non commandées sont aussi envisageables. La machine (1) selon l'invention peut comporter un dispositif de ramassage (20) réalisé différemment. Ce dernier peut ainsi comporter une bande souple enroulée autour d'une part d'un premier rotor pouvant tourner autour d'un axe de rotation et placé à l'avant du dispositif de ramassage (20), et d'autre part d'un deuxième rotor placé plus en arrière. Ce deuxième rotor peut notamment être placé, au travail, à une distance du sol plus élevée que le premier rotor, de manière à ce que le dispositif de ramassage (20) déplace les végétaux vers l'arrière et vers le haut en direction du dispositif de déplacement (21). Une telle bande comporte des dents, des fourches ou des crochets qui peuvent être fixés ou articulés à la bande. L'entraînement du dispositif de ramassage (20) est réalisé au moyen de tout organe approprié. Il peut s'agir d'un moteur hydraulique ou électrique, lequel moteur peut être logé à l'intérieur du rotor ou bien dépasser latéralement de celui-ci. Le dispositif de ramassage (20) peut également être animé au moyen d'une chaîne ou d'une courroie, ou encore d'une cascade de pignons. Une combinaison de tels moyens est aussi possible. Le dispositif de déplacement (21) des végétaux ramassés se situe à l'arrière et à proximité du dispositif de ramassage (20) de sorte qu'il reçoive les végétaux projetés vers l'arrière par celui-ci. Le dispositif de déplacement (21) peut être animé pour déplacer les végétaux transversalement à la direction d'avancement (A). Dans la forme de réalisation des figures, ce dispositif de déplacement (21) comporte un convoyeur à bande (25). Cette bande (25) est entraînée durant le travail de sorte qu'elle déplace les végétaux transversalement au dispositif de ramassage (20), notamment sensiblement parallèlement à l'axe de rotation (23) du rotor (22). Les végétaux sont alors redéposés au sol sous la forme d'un andain en vue de leur reprise ultérieure. Sur le côté arrière du dispositif de déplacement (21) est disposé un déflecteur (26), illustré à la figure 5 et non représenté sur les autres figures pour les besoins de la clarté. Ce dernier comporte une portion (27) sensiblement verticale pendant le travail, pour limiter la projection vers l'arrière des végétaux. Le déflecteur (26) peut également comporter une autre portion (28) sensiblement horizontale pendant le travail, pour limiter les projections de végétaux vers le haut. Cette autre portion (28) est placée dans la continuité de la portion (27) sensiblement verticale, au-dessus du dispositif de déplacement (21). Le dispositif de déplacement (21) peut aussi être un convoyeur à rouleaux, ces derniers étant par exemple montés sur des axes de rotation orientés, au travail, sensiblement dans la direction d'avancement (A). De tels rouleaux sont de préférence placés les uns à côté des autres et à faible distance les uns des autres, et peuvent être animés de telle sorte que les végétaux soient déplacés transversalement au dispositif de ramassage (20). L'entraînement du dispositif de déplacement (21), par exemple du convoyeur à bande (25) ou desdits rouleaux, est réalisé au moyen de tout organe convenable. Il peut s'agir d'un moteur hydraulique ou électrique. Une animation au moyen d'une chaîne ou d'une courroie, ou encore d'une cascade de pignons, est aussi envisageable. Une combinaison de tels moyens est bien entendu possible. Ces moyens peuvent être actionnés dans un sens de fonctionnement ou dans l'autre. Notamment dans le cas d'un convoyeur à bande (25) ou à rouleaux, les végétaux peuvent de la sorte être transférés vers le côté gauche ou le côté droit de l'outil de travail (15), par exemple, pour former un andain d'un côté ou de l'autre. Le dispositif de ramassage (20), le dispositif de déplacement (21) et le déflecteur (26) que comporte l'outil de travail (15), sont supportés par un bâti (29) de cet outil de travail (15). Ce bâti (29) s'étend en partie sous l'outil de travail (15) placé en position de travail, notamment sous le dispositif de déplacement (21). Le bâti (29) s'étend également en partie à l'arrière de l'outil de travail (15) en position de travail, notamment à l'arrière du dispositif de déplacement (21). Le bâti (29) porte au moins un élément support (30) au moyen duquel l'outil de travail (15) repose sur le sol. Le bâti (29) porte de préférence au moins deux éléments supports (30). L'élément support (30) est, par exemple, un patin. Ce patin s'étend, par exemple, sous le dispositif de déplacement (21). Il peut notamment être prévu deux patins sous le dispositif de déplacement (21). L'élément support (30) peut aussi être une roulette. Cette roulette (30) est, par exemple, placée sous le dispositif de déplacement (21), ou à une extrémité latérale (16, 17) de l'outil de travail (15). Il peut notamment être prévu deux roulettes (30) placées sous le dispositif de déplacement (21). Il peut aussi être prévu deux roulettes (30) placées chacune à une extrémité latérale (16, 17) respective de l'outil de travail (15). Ce ou ces éléments support (30) font suivre les dénivellations du sol à l'outil de travail (15), et lui permettent de se déplacer sur le sol en limitant l'introduction de terre dans les végétaux travaillés. Le bâti (29) de l'outil de travail (15) est relié au bras support (7) par l'intermédiaire d'un dispositif de liaison (31).

Le dispositif de liaison (31) est configuré de sorte à autoriser, au moins lorsque le bras support (7) est dans la configuration de travail, un premier déplacement de l'outil de travail (15) par rapport au bras support (7) au cours duquel l'extrémité latérale intérieure (16) et l'extrémité latérale extérieure (17) de l'outil de travail (15) se déplacent verticalement par rapport au bras support (7) et dans la même direction verticale par rapport à celui-ci. Ce premier déplacement est autorisé au moins pendant le travail de la machine de sorte que l'outil de travail (15) concerné puisse bien suivre le terrain. Au moins lorsque le bras support (7) est dans la configuration de travail, les extrémités latérales (16 et 17) sont donc autorisées, au cours de leurs déplacements verticaux respectifs simultanés par rapport au bras support (7), à s'éloigner toutes les deux du sol, ou bien à s'en rapprocher toutes les deux. Le dispositif de liaison (31) comporte au moins un bras (32) qui est visible notamment sur les figures 1 à 4. Dans la configuration de travail du bras support (7), ce bras (32) est orienté essentiellement dans la direction d'avancement (A). Par « orienté essentiellement dans la direction d'avancement (A) », on entend que ce bras (32), notamment une longueur de ce bras (32), forme avec la direction d'avancement (A), un angle compris entre 0° et environ 45°. De plus, dans la configuration de travail du bras support (7), le bras (32) s'étend, au moins en grande partie, en avant du bras support (7). Le bras (32) est articulé au bras support (7) autour d'un premier axe (33). Ce premier axe (33) relie, par exemple, directement le bras (32) au bras support (7). Le premier axe (33) est orienté transversalement, notamment sensiblement perpendiculairement, à la direction d'avancement (A), et sensiblement horizontalement, lorsque le bras support (7) est dans la configuration de travail. Le premier axe (33) peut être un axe physique, c'est-à-dire une pièce allongée de section essentiellement cylindrique, qui permet l'assemblage du bras (32) au bras support (7). Le premier axe (33) peut également, ou alternativement à un axe physique, être un axe virtuel. Dans ce cas, le premier axe (33) est une droite autour de laquelle s'effectue la rotation du bras (32). Un premier axe (33) virtuel existe lorsque, par exemple, l'articulation correspondante du bras (32) au bras support (7) est du type rotule. Par pivotement autour du premier axe (33) qui relie le bras (32) au bras support (7), le bras (32) se déplace verticalement par rapport au bras support (7) en configuration de travail. De la sorte, l'outil de travail (15) se déplace verticalement par rapport à ce bras support (7). Cette possibilité de déplacement vertical de l'outil de travail (15) au moyen du bras (32) et du premier axe (33), permet à l'outil de travail (15) de suivre un terrain au profil irrégulier. Elle autorise également l'outil de travail (15) à occuper la position de travail décrite précédemment, ainsi qu'au moins une position relevée du sol, par exemple de passage d'andain, dans laquelle l'outil de travail (15) n'agit pas sur les végétaux présents au sol. Ledit déplacement vertical de l'outil de travail (15) et/ou son placement dans ladite position relevée, sont possibles alors que le bras support (7) demeure dans sa configuration de travail, immobile ou au moins sensiblement immobile par rapport au châssis (2). Le bras (32) est notamment articulé au bras support (7) et au bâti (29) de l'outil de travail (15) autour de premiers axes (33) respectifs. Ces premiers axes (33) permettent à l'outil de travail (15) de se déplacer verticalement par rapport au bras support (7) et sensiblement parallèlement au sol. Ces premiers axes (33) sont orientés transversalement, notamment sensiblement perpendiculairement, à la direction d'avancement (A), et sensiblement horizontalement, lorsque le bras support (7) est dans la configuration de travail. Ces premiers axes (33) sont notamment sensiblement parallèles entre eux. Un premier axe (33) peut être un axe physique, c'est-à-dire une pièce allongée de section essentiellement cylindrique, qui permet l'assemblage du bras (32) au bras support (7) ou au bâti (29) de l'outil de travail (15). Un premier axe (33) peut également, ou alternativement à un axe physique, être un axe virtuel. Dans ce cas, le premier axe (33) est une droite autour de laquelle s'effectue la rotation du bras (32). Un premier axe (33) virtuel existe lorsque, par exemple, l'articulation correspondante du bras (32) au bras support (7) ou au bâti (29) de l'outil de travail (15) est du type rotule. Par pivotement autour de l'un au moins de ces premiers axes (33), le bras (32) se déplace verticalement par rapport au bras support (7) en configuration de travail. De la sorte, l'outil de travail (15) se déplace verticalement par rapport à ce bras support (7). Au cours de ce déplacement, le bras (32) pivote autour du premier axe (33) qui le relie au bras support (7), ainsi qu'autour du premier axe (33) qui le relie au bâti (29) de l'outil de travail (15). L'un des premiers axes (33) relie par exemple directement le bras (32) au bras support (7). L'autre de ces premiers axes (33) relie par exemple directement le bras (32) au bâti (29) de l'outil de travail (15).

Selon l'invention, le dispositif de liaison (31) comporte des moyens permettant d'opérer un deuxième déplacement de l'outil de travail (15) par rapport au bras support (7). Ce deuxième déplacement est transversal à la direction d'avancement (A) et sensiblement horizontal en considérant le bras support (7) dans la configuration de travail. Ce deuxième déplacement peut être opéré lorsque le bras support (7) est dans la configuration de travail, ou encore lorsque le bras support (7) se trouve dans une configuration intermédiaire située entre la configuration de travail et la configuration de transport. Par « transversal à la direction d'avancement (A) et sensiblement horizontal en considérant le bras support (7) dans la configuration de travail », on entend que, même opéré dans la configuration intermédiaire et non dans la configuration de travail du bras support (7), ce deuxième déplacement aurait une orientation qui, en ramenant fictivement le bras support (7) dans sa configuration de travail, serait transversale à la direction d'avancement (A) et sensiblement horizontale. La configuration intermédiaire est, par exemple, une configuration de passage d'andain. Les moyens permettent d'opérer ce deuxième déplacement indépendamment du premier déplacement vertical de l'outil de travail (15) par rapport au bras support (7). Ainsi, l'outil de travail (15) peut bien suivre le terrain, quelle que soit la position transversale qu'il occupe par rapport au châssis (2).

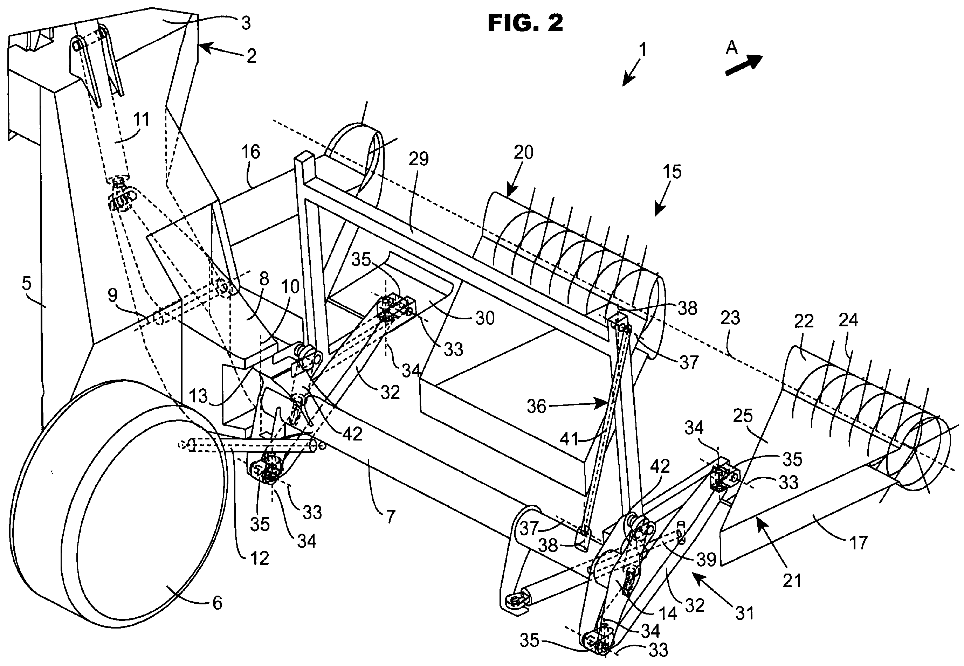

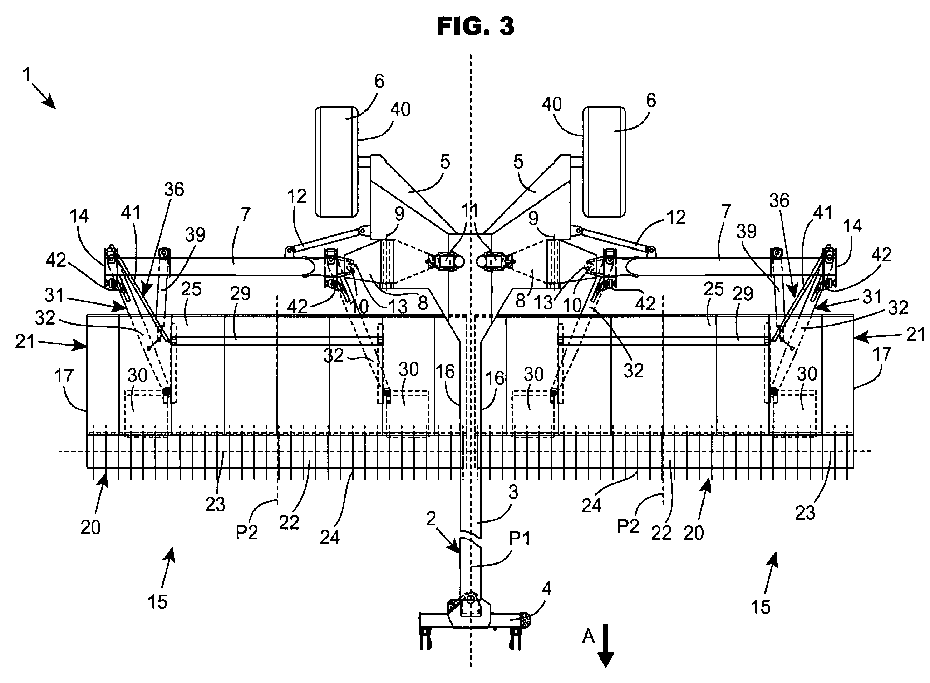

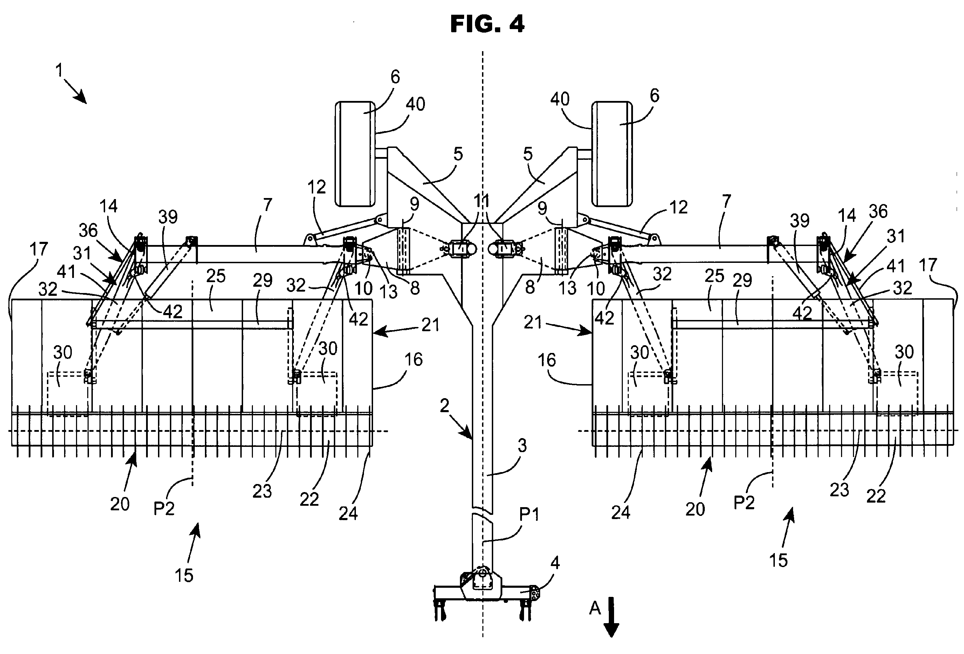

A cet effet, les moyens comportent un deuxième axe (34) orienté sensiblement perpendiculairement au premier axe (33). Dans la configuration de travail du bras support (7), ce deuxième axe (34) est orienté sensiblement verticalement. Le bras (32) est articulé au bras support (7) autour de ce deuxième axe (34). Le deuxième axe (34) relie, par exemple, indirectement le bras (32) au bras support (7), au moyen d'une pièce d'articulation (35) reliée au bras support (7) au moyen du premier axe (33). La forme de réalisation illustrée à la figure 2 comporte un tel agencement du deuxième axe (34). Le deuxième axe (34) peut être un axe physique. Le deuxième axe (34) peut être distinct du premier axe (33). Le deuxième axe (34) peut également croiser le premier axe (33), dans ce cas le premier axe (33) et le deuxième axe (34) forment ensemble une croix d'articulation du bras (32) au bras support (7). Le deuxième axe (34) peut également, ou alternativement à un axe physique, être un axe virtuel. Un deuxième axe virtuel existe lorsque, par exemple, l'articulation correspondante du bras (32) au bras support (7) est du type rotule. Suivant une alternative non représentée, le deuxième axe (34) peut relier directement le bras (32) au bras support (7). Un tel agencement est obtenu par exemple au moyen d'une croix d'articulation disposée entre le bras (32) et le bras support (7), laquelle croix d'articulation intègre le premier axe (33) et le deuxième axe (34). Un autre agencement permettant au bras (32) d'être relié directement au bras support (7), comporte une rotule d'articulation entre les deux éléments précités, laquelle rotule intègre le premier axe (33) et le deuxième axe (34) qui sont alors virtuels. Grâce à la liaison du bras (32) au bras support (7) au moyen du premier axe (33) et du deuxième axe (34), le dispositif de liaison (31) regroupe les fonctions de déplacement vertical et transversal de l'outil de travail (15) par rapport au bras support (7). Le suivi du terrain, le déplacement entre la position de travail et une position relevée de l'outil de travail au-dessus du sol, ainsi que le réglage de sa position transversale par rapport au châssis (2), peuvent ainsi être assurés par le seul dispositif de liaison (31), en particulier par les seuls mouvements du bras (32) par rapport au bras support (7) dans les directions verticale et transversale. L'agencement du bras support (7) ainsi que ses moyens d'articulation et de déplacement par rapport au châssis (2) peuvent être simplifiés et allégés. Notamment, il peut être superflu de recourir à un bras (32) en plusieurs tronçons articulés et/ou coulissants en vue de déplacer l'outil de travail (15) transversalement par rapport au châssis (2). Les moyens comportent notamment des deuxièmes axes (34) orientés sensiblement perpendiculairement au premier axe (33). Dans la configuration de travail du bras support (7), ces deuxièmes axes (34) sont orientés sensiblement verticalement. Ces deuxièmes axes (34) sont notamment sensiblement parallèles entre eux. Ces deuxièmes axes (34) permettent à l'outil de travail (15) de conserver, en vue de dessus de la machine (1), la même orientation par rapport à la direction d'avancement (A), notamment de s'étendre sensiblement perpendiculairement à la direction d'avancement (A), quelle que soit la position transversale de l'outil de travail (15) par rapport au bras support (7) en configuration de travail. Cet effet ressort d'une comparaison des figures 3 et 4. Le bras (32) est articulé au bras support (7) et au bâti (29) de l'outil de travail (15) autour de ces deuxièmes axes (34) respectifs. L'un de ces deuxièmes axes (34) relie, par exemple, indirectement le bras (32) au bras support (7) au moyen de la pièce d'articulation (35) reliée au bras support (7) au moyen du premier axe (33) correspondant. L'autre de ces deuxièmes axes (34) relie, par exemple, indirectement le bras (32) au bâti (29) de l'outil de travail (15), au moyen d'une autre pièce d'articulation (35) reliée à ce bâti (29) au moyen du premier axe (33) correspondant. Un deuxième axe (34) peut être un axe physique, c'est-à-dire une pièce allongée de section essentiellement cylindrique, qui permet l'assemblage du bras (32) au bras support (7) ou au bâti (29) de l'outil de travail (15). Un deuxième axe (34) peut être distinct du premier axe (33) correspondant. Un deuxième axe (34) peut également croiser le premier axe (33) correspondant, dans ce cas le premier axe (33) et le deuxième axe (34) forment ensemble une croix d'articulation du bras (32) au bras support (7) ou au bâti (29) de l'outil de travail (15). Un deuxième axe (34) peut également, ou alternativement à un axe physique, être un axe virtuel. Dans ce cas, le deuxième axe (34) est une droite autour de laquelle s'effectue la rotation du bras (32). Un deuxième axe (34) virtuel existe lorsque, par exemple, l'articulation correspondante du bras (32) au bras support (7) ou au bâti (29) de l'outil de travail (15) est du type rotule. Suivant une alternative non représentée, l'un et/ou l'autre des deuxièmes axes (34) d'articulation respectifs au bras support (7) et au bâti (29) de l'outil de travail (15), peut (peuvent) relier directement le bras (32) au bras support (7), respectivement au bâti (29). Un tel agencement est obtenu par exemple au moyen d'une croix d'articulation disposée entre le bras (32) et le bras support (7), respectivement entre le bras (32) et le bâti (29), laquelle croix d'articulation intègre les premier et deuxième axes (33 et 34) concernés. Un autre agencement permettant au bras (32) d'être relié directement au bras support (7), respectivement au bâti (29), comporte une rotule d'articulation entre le bras (32) et le bras support (7), respectivement entre le bras (32) et le bâti (29), laquelle rotule intègre les premier et deuxième axes (33 et 34) concernés qui sont alors virtuels.

Le dispositif de liaison (31) comporte un organe de liaison (36). Dans la configuration de travail du bras support (7), l'organe de liaison (36) s'étend, au moins en grande partie, en avant du bras support (7). L'organe de liaison (36) est orienté essentiellement dans la direction d'avancement (A) lorsque le bras support (7) est dans la configuration de travail. Par « orienté essentiellement dans la direction d'avancement (A) », on entend que l'organe de liaison (36) forme avec la direction d'avancement (A) un angle compris entre 0° et environ 45°. L'organe de liaison (36) est articulé au bras support (7) autour d'un premier axe de liaison (37). Ce premier axe de liaison (37) relie, par exemple, directement l'organe de liaison (36) au bras support (7). Le premier axe de liaison (37) est orienté, lorsque le bras support (7) est en configuration de travail, sensiblement horizontalement et transversalement, notamment sensiblement perpendiculairement, à la direction d'avancement (A). Le premier axe de liaison (37) est sensiblement parallèle au premier axe (33) du bras (32). A l'instar du premier axe (33), le premier axe de liaison (37) peut être un axe physique. Le premier axe de liaison (37) peut également, ou alternativement à un axe physique, être un axe virtuel. Dans ce cas, le premier axe de liaison (37) est une droite autour de laquelle s'effectue la rotation de l'organe de liaison (36). Un premier axe de liaison (37) virtuel existe lorsque, par exemple, l'articulation correspondante de l'organe de liaison (36) au bras support (7) est du type rotule. Par pivotement autour du premier axe de liaison (37), l'organe de liaison (36) se déplace verticalement par rapport au bras support (7) en configuration de travail. Le bras (32) est distant et non relié à l'organe de liaison (36).

L'organe de liaison (36) est notamment articulé au bras support (7) et à l'outil de travail (15) autour de premiers axes de liaison (37) respectifs. L'un de ces premiers axes de liaison (37) relie, par exemple, directement l'organe de liaison (36) au bras support (7). L'autre de ces premiers axes de liaison (37) relie, par exemple, directement l'organe de liaison (36) au bâti (29) de l'outil de travail (15). Ces premiers axes de liaison (37) sont orientés, lorsque le bras support (7) est en configuration de travail, sensiblement horizontalement et transversalement, notamment sensiblement perpendiculairement, à la direction d'avancement (A). Ces premiers axes de liaison (37) sont notamment sensiblement parallèles entre eux. Ces premiers axes de liaison (37) sont notamment sensiblement parallèles au premier axe (33) du bras (32). Un premier axe de liaison (37) peut être un axe physique. Un premier axe de liaison (37) peut également, ou alternativement à un axe physique, être un axe virtuel. Dans ce cas, le premier axe de liaison (37) est une droite autour de laquelle s'effectue la rotation de l'organe de liaison (36). Un premier axe de liaison (37) virtuel existe lorsque, par exemple, l'articulation correspondante de l'organe de liaison (36) au bras support (7) ou au bâti (29) de l'outil de travail (15) est du type rotule. Par pivotement autour d'au moins un des premiers axes de liaison (37), l'organe de liaison (36) se déplace verticalement par rapport au bras support (7) en configuration de travail. Notamment, au cours de ce déplacement, l'organe de liaison (36) pivote autour du premier axe de liaison (37) qui le relie au bras support (7). Au cours de ce déplacement, l'organe de liaison (36) pivote également autour du premier axe de liaison (37) qui le relie au bâti (29) de l'outil de travail (15).

Dans la forme de réalisation des figures, le dispositif de liaison (31) comporte deux bras (32). Ceux-ci sont distants l'un de l'autre et non reliés l'un à l'autre. Chacun de ces bras (32) est articulé d'une part au bras support (7) au moyen d'un premier axe (33) et d'un deuxième axe (34), d'autre part au bâti (29) de l'outil de travail (15) également au moyen d'un premier axe (33) et d'un deuxième axe (34). Chaque bras (32) est distant de l'organe de liaison (36) et non relié à celui-ci.

Les moyens comportent un deuxième axe de liaison (38) orienté sensiblement perpendiculairement au premier axe de liaison (37). Dans la configuration de travail du bras support (7), ce deuxième axe de liaison (38) est orienté sensiblement verticalement. L'organe de liaison (36) est articulé au bras support (7) autour de ce deuxième axe de liaison (38). Le deuxième axe de liaison (38) peut être un axe physique. Le deuxième axe de liaison (38) peut être distinct du premier axe de liaison (37). Le deuxième axe de liaison (38) peut également croiser le premier axe de liaison (37), dans ce cas le premier axe de liaison (37) et le deuxième axe de liaison (38) forment ensemble une croix d'articulation de l'organe de liaison (36) au bras support (7). Le deuxième axe de liaison (38) peut également, ou alternativement à un axe physique, être un axe virtuel. Un deuxième axe de liaison (38) virtuel existe lorsque, par exemple, l'articulation correspondante de l'organe de liaison (36) au bras support (7) est du type rotule.

Les moyens comportent notamment des deuxièmes axes de liaison (38) orientés sensiblement perpendiculairement au premier axe de liaison (37). Dans la configuration de travail du bras support (7), ces deuxièmes axes de liaison (38) sont orientés sensiblement verticalement. L'organe de liaison (36) est articulé au bras support (7) et au bâti (29) de l'outil de travail (15) autour de ces deuxièmes axes de liaison (38) respectifs. Un deuxième axe de liaison (38) peut être un axe physique. Un deuxième axe de liaison (38) peut être distinct du premier axe de liaison (37) correspondant. Un deuxième axe de liaison (38) peut également croiser le premier axe de liaison (37) correspondant, dans ce cas le premier axe de liaison (37) et le deuxième axe de liaison (38) forment ensemble une croix d'articulation de l'organe de liaison (36) au bras support (7) ou au bâti (29) de l'outil de travail (15). Un deuxième axe de liaison (38) peut également, ou alternativement à un axe physique, être un axe virtuel. Un deuxième axe de liaison (38) virtuel existe lorsque, par exemple, l'articulation correspondante de l'organe de liaison (36) au bras support (7) ou à l'outil de travail (15) est du type rotule.

Selon une caractéristique avantageuse de l'invention, un bras (32) s'étend vers l'avant depuis le bras support (7) en configuration de travail, en direction de la partie inférieure du bâti (29). En particulier, le premier axe (33), reliant ce bras (32) au bâti (29) de l'outil de travail (15), est situé sous le dispositif de déplacement (21). Une grande partie du poids de l'outil de travail (15) est ainsi reprise par le bras (32). Le premier axe (33), reliant le bras (32) au bâti (29) de l'outil de travail (15), est notamment disposé sensiblement à l'aplomb d'une droite parallèle à l'axe de rotation (23) du dispositif de ramassage (20) et passant par le centre de gravité de l'outil de travail (15). De la sorte, ce bras (32) porte l'outil de travail (15) de manière équilibrée, la tendance de l'outil de travail (15) à vouloir pivoter autour du premier axe (33), reliant le bras (32) au bâti (29), est réduite. Dans la forme de réalisation des figures, les deux bras (32) s'étendent vers l'avant depuis le bras support (7) en configuration de travail, en direction de la partie inférieure du bâti (29). En particulier, les premiers axes (33) reliant ces bras (32) au bâti (29) de l'outil de travail (15), sont situés sous le dispositif de déplacement (21). Ces premiers axes (33) reliant les bras (32) au bâti (29) de l'outil de travail (15) sont notamment disposés sensiblement à l'aplomb d'une droite parallèle à l'axe de rotation (23) du dispositif de ramassage (20) et passant par le centre de gravité de l'outil de travail (15). De la sorte, l'outil de travail (15) est presque en équilibre sur les bras (32) qui le portent, et les efforts dans l'organe de liaison (36) - sollicitations en traction ou en compression - sont très réduits.

Les moyens comportent un premier actionneur (39) qui permet de déplacer l'outil de travail (15) par rapport au bras support (7), transversalement à la direction d'avancement (A). Ce premier actionneur (39) est, par exemple, un vérin hydraulique. Le premier actionneur (39) relie deux éléments parmi le bras support (7), le dispositif de liaison (31) et le bâti (29) de l'outil de travail (15). En étant relié par exemple au dispositif de liaison (31), le premier actionneur (39) est relié à l'un des bras (32) ou à l'organe de liaison (36). Dans la forme de réalisation des figures, le premier actionneur (39) est disposé, notamment articulé, entre le bras support (7) et l'un des bras (32). Il s'étend de manière non parallèle à ce bras (32). Ainsi, lorsque le premier actionneur (39) est piloté au raccourcissement ou à l'allongement, il fait pivoter le bras (32) autour du deuxième axe (34) qui le relie au bras support (7). Bien entendu, le premier actionneur (39) pourrait aussi être articulé entre le bras support (7) et le bâti (29) de l'outil de travail (15), en s'étendant non parallèlement aux bras (32). Le premier actionneur (39) permet de déplacer l'outil de travail (15) entre une première position transversale par rapport au bras support (7) et une deuxième position transversale par rapport au bras support (7). Dans la première position transversale illustrée à la figure 3, l'extrémité latérale intérieure (16) de l'outil de travail (15) est rapprochée d'un premier plan (P1) vertical médian du châssis (2). Ce premier plan (P1) est orienté dans la direction d'avancement (A). Il passe par l'axe longitudinal de la poutre centrale (3) du châssis (2). Dans la première position transversale représentée à la figure 3, l'extrémité latérale intérieure (16) de l'outil de travail (15) est située entre le premier plan (P1) et la roue (6) située, par rapport à la poutre centrale (3), du même côté que l'outil de travail (15). L'outil de travail (15) peut occuper une première position de travail obtenue par le positionnement du bras support (7) dans la configuration de travail, et par le positionnement de l'outil de travail (15) dans la première position transversale par rapport au bras support (7). Dans cette première position de travail, l'extrémité latérale intérieure (16) de l'outil de travail (15) se situe sensiblement dans le premier plan (P1) vertical médian du châssis (2). On relèvera notamment sur la figure 3 que cette extrémité latérale intérieure (16) se situe alors sous la poutre centrale (3) du châssis (2). Dans la deuxième position transversale de l'outil de travail (15) par rapport au bras support (7), illustrée à la figure 4, l'extrémité latérale intérieure (16) de l'outil de travail (15) est éloignée du premier plan (P1) vertical médian du châssis (2). L'outil de travail (15) peut occuper une deuxième position de travail obtenue par le positionnement du bras support (7) dans la configuration de travail et par le positionnement de l'outil de travail (15) dans la deuxième position transversale par rapport au bras support (7). Dans cette deuxième position de travail, l'extrémité latérale intérieure (16) de l'outil de travail (15) est notamment située sensiblement au niveau du flanc intérieur (40) du pneu de la roue (6) située, par rapport à la poutre centrale (3), du même côté que l'outil de travail (15), ou légèrement en retrait de ce flanc intérieur (40). De la sorte, la distance séparant l'extrémité latérale intérieure (16) du premier plan (P1) est égale, ou légèrement inférieure, à la moitié de la distance séparant les flancs intérieurs (40) respectifs des pneus des roues (6). Le bras support (7) étant en configuration de travail, deux plans verticaux passant chacun par une longueur d'un bras (32) respectif, sont sensiblement parallèles entre eux. De plus, les deux bras (32) ont sensiblement la même longueur. De la sorte, le déplacement de l'outil de travail (15) entre la première position transversale et la deuxième position transversale est sensiblement parallèle à une longueur du bras support (7).

Selon une caractéristique avantageuse de l'invention, l'outil de travail (15) comporte un deuxième plan (P2) vertical médian situé à mi-distance des extrémités latérales intérieure et extérieure (16 et 17), un bras (32) est situé entre l'extrémité latérale intérieure (16) et le deuxième plan (P2) vertical médian, et l'autre bras (32) est situé entre le deuxième plan (P2) vertical médian et l'extrémité latérale extérieure (17). De la sorte, le bâti (29) de l'outil de travail (15) est fermement maintenu par rapport au bras support (7) en configuration de travail. Cette disposition des bras (32) réduit considérablement la tendance de l'outil de travail (15) à vouloir pivoter autour d'un axe vertical lorsque, pendant le travail, les efforts exercés sur l'outil de travail (15) par le terrain et par les végétaux travaillés, ne sont pas répartis uniformément entre l'extrémité latérale intérieure (16) et l'extrémité latérale extérieure (17) de l'outil de travail (15). C'est notamment le cas lorsque la densité des végétaux travaillés, notamment ramassés, n'est pas homogène, ou encore lorsque un andain ramassé par l'outil de travail (15) n'est pas centré par rapport à celui-ci. Par ailleurs, un bras (32) est placé sensiblement au niveau de l'extrémité intérieure (13) du bras support (7). Il s'agit du bras (32) situé entre l'extrémité latérale intérieure (16) de l'outil de travail (15) et le deuxième plan (P2) vertical médian. Un bras (32) est placé sensiblement au niveau de l'extrémité extérieure (14) du bras support (7). Il s'agit du bras (32) situé entre le deuxième plan (P2) vertical médian et l'extrémité latérale extérieure (17).

L'organe de liaison (36) comporte une barre (41). Notamment, l'organe de liaison (36) est constitué par une barre (41). Dans la configuration de travail du bras support (7), cette barre (41) est orientée essentiellement dans la direction d'avancement (A). Par « orientée essentiellement dans la direction d'avancement (A) », on entend que cette barre (41) forme avec la direction d'avancement (A), un angle compris entre 0° et environ 45°. La barre (41) est articulée au bras support (7) et au bâti (29) de l'outil de travail (15) au moyen des premiers et deuxièmes axes de liaison (37 et 38). Notamment, la barre (41) est articulée directement au bras support (7) au moyen d'au moins l'un des premier et deuxième axes de liaison (37 et 38) concernés, et directement au bâti (29) de l'outil de travail (15) au moyen d'au moins l'un des autres premier et deuxième axes de liaison (37 et 38) concernés. La barre (41) est de longueur fixe ou variable. Une barre (41) de longueur de variable comporte, par exemple, des éléments vissés avec pas à gauche et pas à droite. Elle peut aussi se composer d'éléments pouvant glisser l'un dans l'autre et être immobilisés l'un par rapport à l'autre au moyen d'une broche susceptible de s'engager dans plusieurs trous de réglage. Enfin, une telle barre (41) de longueur variable peut prendre la forme d'un vérin, notamment un vérin hydraulique.

L'organe de liaison (36) et l'un au moins des bras (32) se situent dans des plans respectifs qui sont verticalement distants l'un de l'autre lorsque le bras support (7) est dans la configuration de travail. Ainsi qu'il apparaît à la figure 5, l'organe de liaison (36) s'étend dans un plan qui, lorsque le bras support (7) est dans la configuration de travail, est verticalement plus éloigné du sol que celui dans lequel s'étend un bras (32), notamment chaque bras (32). Lorsque le bras support (7) est dans la configuration de travail, un bras (32), notamment chaque bras (32), s'étend, au moins sur une partie de sa longueur, sous le dispositif de déplacement (21). L'organe de liaison (36) s'étend quant à lui, au moins sur une partie de sa longueur, depuis le bras support (7) en direction de l'extrémité verticale supérieure (19) de l'outil de travail (15), par exemple, en direction d'une partie supérieure du déflecteur (26) placé à l'arrière du dispositif de déplacement (21).

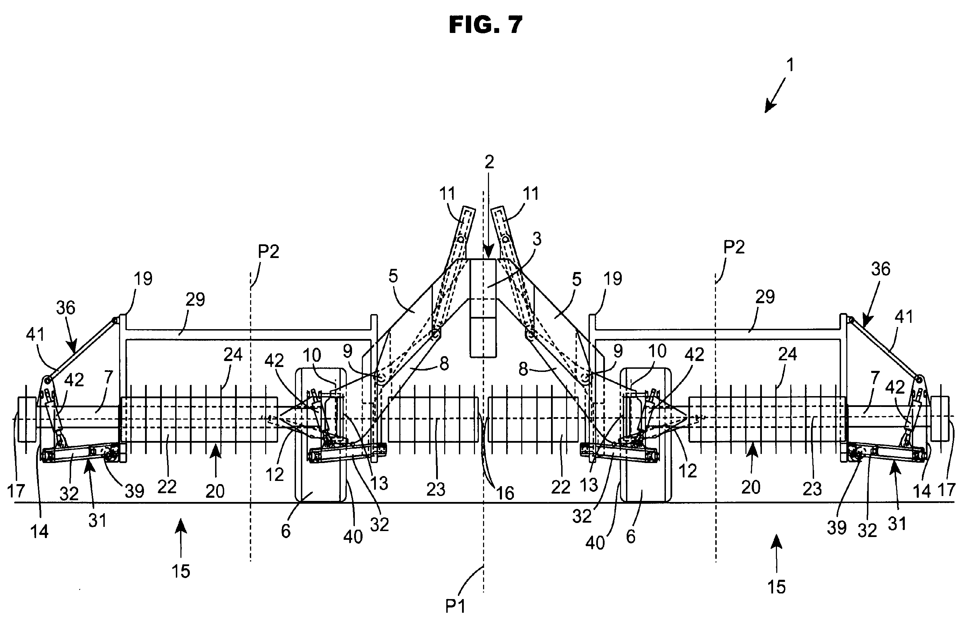

La machine (1) selon l'invention comporte au moins un deuxième actionneur (42). Celui-ci relie deux éléments parmi le bras support (7), le dispositif de liaison (31) et le bâti (29) de l'outil de travail (15). Dans la forme de réalisation des figures, le deuxième actionneur (42) est articulé entre le bras support (7) et un bras (32). Le deuxième actionneur (42) est, par exemple, un vérin, notamment un vérin hydraulique. Le deuxième actionneur (42) permet d'opérer un déplacement de l'outil de travail (15) par rapport au bras support (7) vers au moins une position relevée de l'outil de travail (15) par rapport au bras support (7), dans laquelle l'outil de travail (15) est distant du sol. Cette position relevée est illustrée à la figure 7. Il est notamment prévu deux deuxièmes actionneurs (42) pour l'outil de travail (15). Chacun est articulé au bras support (7) et à un bras (32) respectif. Le déplacement vers la position relevée est opéré par les deux deuxièmes actionneurs (42) qui sont, par exemple, actionnés simultanément. Dans la position relevée par rapport au bras support (7), l'outil de travail (15) n'agit pas sur les végétaux présents au sol. Cette position relevée est située entre la position de travail et la position de transport de l'outil de travail (15). Le déplacement de l'outil de travail (15) par rapport au bras support (7), au moyen du deuxième actionneur (42), vers la position relevée de l'outil de travail (15) par rapport au bras support (7), notamment de la position de travail de l'outil de travail (15) vers la position relevée de l'outil de travail (15) par rapport au bras support (7), comporte une composante verticale. Ce déplacement peut être opéré alors que le bras support (7) est dans la configuration de travail. Ce déplacement est essentiellement vertical. De plus, l'outil de travail (15) demeure sensiblement parallèle au sol au cours de ce déplacement. Dans la configuration de travail du bras support (7) et dans la position relevée de l'outil de travail (15) par rapport au bras support (7), l'outil de travail (15) s'étend sensiblement perpendiculairement à la direction d'avancement (A). Dans la configuration de travail du bras support (7) et dans la position relevée de l'outil de travail par rapport au bras support (7), les extrémités latérales intérieure et extérieure (16 et 17) de l'outil de travail (15) sont situées sensiblement à la même hauteur au-dessus du sol. Notamment, le bras support (7) dans la configuration de travail demeure immobile, ou sensiblement immobile, par rapport au châssis (2). La position relevée obtenue, alors que le bras support (7) est dans la configuration de travail, est, par exemple, une position de passage d'andain de l'outil de travail (15), permettant notamment le passage au-dessus d'un andain de faible hauteur formé précédemment par une machine de récolte réglée en mode d'épandage large. Dans cette position relevée de l'outil de travail (15) par rapport au bras support (7) en configuration de travail, le dégagement vertical de l'outil de travail (15) au-dessus du sol est important, compris entre 200 mm et 400 mm par exemple, voisin de 300 mm par exemple.

Selon une caractéristique avantageuse de l'invention, une position relevée est une première position relevée. Cette première position relevée que peut occuper l'outil de travail (15) par rapport au bras support (7), est obtenue par le positionnement transversal de l'outil de travail (15) dans la première position transversale par rapport au bras support (7). La position relevée illustrée à la figure 7 est en l'occurrence une telle première position relevée. A partir de la première position de travail de l'outil de travail (15), l'actionnement du ou des deuxièmes actionneurs (42) a pour effet de relever l'outil de travail (15) de sorte que ce dernier soit déplacé vers la première position relevée par rapport au bras support (7).

Selon une autre caractéristique avantageuse de l'invention, une autre position relevée est une deuxième position relevée. Cette deuxième position relevée que peut occuper l'outil de travail (15) par rapport au bras support (7), est obtenue par le positionnement transversal de l'outil de travail (15) dans la deuxième position transversale par rapport au bras support (7). A partir de la deuxième position de travail de l'outil de travail (15), l'actionnement du ou des deuxièmes actionneurs (42) a pour effet de relever l'outil de travail (15) de sorte que ce dernier soit déplacé vers la deuxième position relevée par rapport au bras support (7).

L'outil de travail (15) peut notamment occuper les première et deuxième positions relevées par rapport au bras support (7), à savoir, tantôt l'une, tantôt l'autre, selon les besoins, lorsque le bras support (7) est dans la configuration de travail. Il est également possible de déplacer l'outil de travail (15) de la première position relevée vers la deuxième position relevée, et vice versa, par actionnement du premier actionneur (39), alors que le bras support (7) est dans la configuration de travail. Ainsi, depuis la première position relevée illustrée à la figure 7, l'outil de travail (15) peut être éloigné de la poutre centrale (3) du châssis (2) pour rejoindre sa deuxième position relevée, le bras support (7) demeurant, au cours de ce déplacement, dans sa configuration de travail.

Le troisième actionneur (11) disposé entre le bras support (7) et le châssis (2) permet d'opérer un déplacement du bras support (7), par rapport au châssis (2), vers la configuration intermédiaire par rapport au châssis (2), laquelle est située entre la configuration de travail et la configuration de transport. Dans cette configuration intermédiaire, l'extrémité extérieure (14) du bras support (7) se situe à une hauteur au-dessus du sol plus importante que son extrémité intérieure (13). En sus, l'extrémité extérieure (14) est placée en arrière par rapport à l'extrémité intérieure (13). Le bras support (7) présente donc une orientation oblique, intermédiaire entre son orientation sensiblement horizontale et transversale dans la configuration de travail, et son orientation sensiblement horizontale et sensiblement parallèle à la direction d'avancement (A) dans la configuration de transport. Dans cette configuration intermédiaire du bras support (7) par rapport au châssis (2), l'outil de travail (15) s'étend de manière oblique par rapport à un plan vertical perpendiculaire à la direction d'avancement (A).

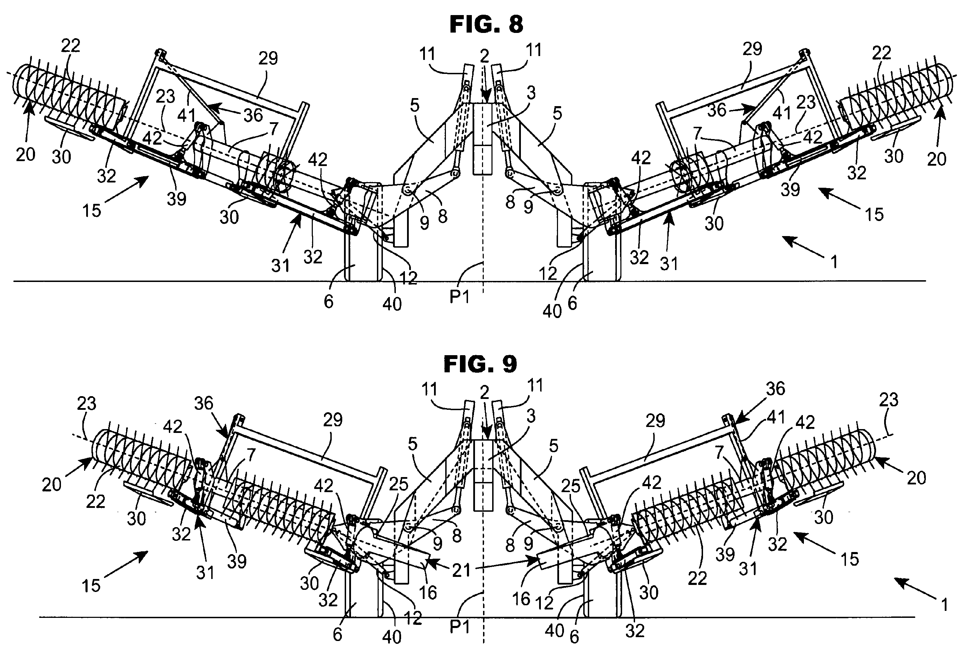

L'outil de travail (15) peut occuper la ou les positions relevées par rapport au bras support (7) lorsque ce dernier est dans la configuration intermédiaire. Dans ce cas, l'outil de travail (15) est distant du sol. Il n'agit pas sur les végétaux présents au sol. La figure 8 montre que l'outil de travail (15) peut occuper la deuxième position relevée, par rapport au bras support (7), lorsque ce dernier est dans la configuration intermédiaire. La figure 9 montre quant à elle, que l'outil de travail (15) peut occuper la première position relevée, par rapport au bras support (7), lorsque ce dernier est dans la configuration intermédiaire. Notamment, lorsque le bras support (7) est dans la configuration intermédiaire, le premier actionneur (39) peut être actionné de sorte à déplacer l'outil de travail (15) par rapport au bras support (7) de la deuxième position transversale - voir la figure 8 - vers la première position transversale - voir la figure 9. De cette manière, l'extrémité latérale intérieure (16) de l'outil de travail (15) est rapprochée de la poutre centrale (3) du châssis (2). Ainsi, lorsque le bras support (7) se trouve ultérieurement dans sa configuration de transport, le bras (32), notamment chaque bras (32), reliant le bâti (29) de l'outil de travail (15) au bras support (7), est orienté vers le haut et vers l'avant. De cette manière, l'outil de travail (15) présente un positionnement avancé par rapport au bras support (7). La longueur totale de la machine (1) au transport s'en trouve réduite.

Lorsque l'outil de travail (15) se situe dans une position relevée, notamment dans chacune des première et deuxième positions relevées, par rapport au bras support (7) dans la configuration intermédiaire, l'extrémité latérale extérieure (17) de l'outil de travail (15) se situe à une hauteur au-dessus du sol plus importante que son extrémité latérale intérieure (16). En sus, l'extrémité latérale extérieure (17) de l'outil de travail (15) est située plus en arrière que l'extrémité latérale intérieure (16). Ainsi, dans une position relevée, notamment dans chacune des première et deuxième positions relevées, par rapport au bras support (7) dans la configuration intermédiaire, l'outil de travail (15) s'étend de manière oblique par rapport à un plan vertical perpendiculaire à la direction d'avancement (A). Par ailleurs, l'extrémité latérale intérieure (16) de l'outil de travail (15) se situe à une hauteur au-dessus du sol plus importante dans la configuration intermédiaire du bras support (7), que dans la configuration de travail du bras support (7) par rapport au châssis (2), notamment lorsque l'outil de travail (15) occupe la première position transversale par rapport au bras support (7).

La configuration intermédiaire du bras support (7) est, par exemple, une configuration de passage d'andain. Une position relevée de l'outil de travail (15) par rapport au bras support (7) dans la configuration intermédiaire est, par exemple, une position de passage d'andain de l'outil de travail (15), permettant notamment le passage au-dessus d'un andain resserré et de hauteur importante. Dans cette position relevée, le dégagement vertical de l'outil de travail (15) au-dessus du sol est tout à fait considérable. L'extrémité latérale intérieure (16) s'élève à une hauteur du sol comprise entre 500 mm et 1000 mm par exemple, tandis que l'extrémité latérale extérieure (17) se situe à une distance du sol comprise entre 800 mm et 1300 mm par exemple.

Le deuxième actionneur (42) comporte un moyen d'allégement de l'outil de travail au sol. A cet effet, le deuxième actionneur (42) comporte, par exemple, un vérin qui assure les fonctions à la fois de relevage et d'allégement de l'outil de travail (15) par rapport au bras support (7). Pour l'allégement, ce vérin est, par exemple, relié à un accumulateur de pression. Pendant le travail, le bras support (7) en configuration de travail demeure immobile, ou sensiblement immobile, par rapport au châssis (2). C'est le deuxième actionneur (42) placé en mode « flottant » qui permet les mouvements verticaux de l'outil de travail (15) par rapport au châssis (2), ces mouvements étant dans une certaine mesure contrôlés et amortis. Chaque deuxième actionneur (42) articulé au bras support (7) et à un bras (32) respectif comporte un tel moyen d'allégement. En sus, les articulations respectives de chaque bras (32) au bâti (29) de l'outil de travail (15) et au bras support (7) sont configurées pour autoriser un pivotement de l'outil de travail (15), par rapport au bras support (7) dans la configuration de travail, autour d'un axe virtuel orienté sensiblement dans la direction d'avancement (A). Grâce à ce moyen d'allégement et à ces articulations associés à chaque bras (32), les bras (32) peuvent, pendant le travail, se déplacer verticalement par rapport au bras support (7) indépendamment l'un de l'autre. Ainsi, lorsque l'outil de travail (15) évolue sur un terrain irrégulier, ses extrémités latérales intérieure et extérieure (16 et 17) peuvent se déplacer verticalement dans des directions différentes et/ou avec des amplitudes différentes. De plus, étant donné la localisation de chaque bras (32) entre le deuxième plan (P2) vertical médian et l'extrémité latérale (16, 17) correspondante, chaque bras (32) reprend sensiblement la même fraction des efforts verticaux exercés sur ces bras (32) par l'outil de travail. L'allégement de l'outil de travail (15) est équilibré entre les deux bras (32). L'allégement de l'outil de travail (15) sur sa largeur de travail est uniforme.

La forme de réalisation des figures comporte deux outils de travail (15) articulés chacun au châssis (2) au moyen d'un bras support (7) respectif situé d'un côté respectif du châssis (2). Les figures 1 et 2 représentent un seul outil de travail (15), disposé sur le côté droit de la machine (1), le deuxième outil de travail (15) est placé sur le côté gauche de la machine (1).

Chaque outil de travail (15) comporte un bâti (29) relié au bras support (7) correspondant par l'intermédiaire d'un dispositif de liaison (31) respectif. Par actionnement d'au moins un, notamment de chaque, premier actionneur (39) associé à l'outil de travail (15) correspondant, il est possible de régler la largeur totale de travail de la machine (1). Le premier actionneur (39) associé à un outil de travail (15) peut être actionné lorsque le bras support (7) est dans la configuration de travail ou dans la configuration intermédiaire. Les dispositifs de ramassage (20) et de déplacement (21) respectifs sont alors plus ou moins éloignés l'un de l'autre, ce qui permet de faire varier la largeur d'un andain central obtenu à partir de végétaux ramassés par chaque dispositif de ramassage (20) et déplacés par chaque dispositif de déplacement (21) tournant en direction de la poutre centrale (3) du châssis (2). Lorsque chaque bras support (7) se trouve dans sa configuration de travail respective et que l'un au moins des outils de travail (15) se trouve dans la deuxième position transversale par rapport au bras support (7) correspondant, donc que cet outil de travail (15) se trouve dans sa deuxième position de travail, les extrémités latérales intérieures (16) de ces outils de travail (15) sont nettement écartées l'une de l'autre perpendiculairement à la direction d'avancement (A). Notamment, chaque outil de travail (15) peut se trouver dans la deuxième position transversale par rapport au bras support (7) en configuration de travail, c'est-à-dire que chaque outil de travail (15) se trouve alors dans sa deuxième position de travail. La distance, séparant les extrémités latérales intérieures (16) respectives, autorise la formation d'un andain central déposé entre les deux outils de travail (15), à partir, par exemple, d'andains latéraux repris par chaque outil de travail (15) respectif. Lorsque chaque bras support (7) se trouve dans sa configuration de travail respective et que chaque outil de travail (15) se trouve dans la première position transversale par rapport au bras support (7) correspondant, c'est-à-dire lorsque chaque outil de travail se trouve dans sa première position de travail respective, les extrémités latérales intérieures (16) de ces outils de travail (15) sont juxtaposées. Cette disposition des outils de travail (15) permet la formation d'un andain déposé du côté gauche ou droit de la machine (1), à partir, par exemple, d'une largeur continue de végétaux ramassée, par exemple, de végétaux fauchés ou fanés étalés au sol.

Une transposition de la machine d'une situation de travail vers une situation de transport comporte par exemple les étapes détaillées ci-après. L'outil de travail (15) porté par le bras support (7) en configuration de travail, est dans un premier temps relevé du sol par actionnement du ou des deuxièmes actionneurs (42). Ce déplacement vertical est opéré en conservant la position transversale de l'outil de travail (15) par rapport au bras support (7). Ensuite, le bras support (7) est déplacé de sa configuration de travail vers sa configuration intermédiaire. Si l'outil de travail (15) se trouve, par rapport au bras support (7), dans une position transversale autre que la première position transversale, il est alors déplacé par actionnement du premier actionneur (39), en vue de rejoindre cette première position transversale. Enfin, le bras support (7) est replié vers le haut et vers l'arrière jusqu'à atteindre sa configuration de transport.

Une machine (1) agricole pour la récolte de végétaux conforme à l'invention peut être une faucheuse. Sur une telle machine, un outil de travail est configuré pour effectuer des travaux de fauchage. Un tel outil de travail comporte, par exemple, un dispositif de fauchage comportant une barre le long de laquelle s'étendent des disques ou des tambours munis de couteaux. Ce dispositif de fauchage peut être suivi d'un dispositif de conditionnement à doigts, fléaux ou rouleaux, et/ou d'un dispositif d'andainage comportant un ou plusieurs déflecteurs, ou encore un tapis ou des rouleaux, pour déplacer les végétaux fauchés transversalement à la direction d'avancement. Une telle machine comporte, par exemple, deux tels outils de travail placés chacun sur un côté respectif du châssis.

Une machine (1) agricole pour la récolte de végétaux selon l'invention peut être une machine portée, notamment une machine portée à l'arrière d'un tracteur. Sur une telle machine, le châssis comporte une partie centrale possédant un dispositif d'attelage conçu pour l'accrocher à l'attelage trois points d'un tracteur.

Bien entendu, l'invention n'est pas limitée à la forme de réalisation décrite et représentée sur les figures annexées. Des modifications restent possibles, sans sortir pour autant du domaine de protection de l'invention.

## Revendications

1. Machine agricole pour la récolte de végétaux, notamment de fourrage, cette machine (1) étant déplaçable dans une direction d'avancement (A) et comportant :
- un châssis (2),
- au moins un bras support (7) articulé au châssis (2) et déplaçable par rapport au châssis (2) entre une configuration de travail dans laquelle le bras support (7) s'étend latéralement par rapport au châssis (2), et une configuration de transport dans laquelle le bras support (7) est replié de sorte que son encombrement perpendiculairement à la direction d'avancement (A) est réduit,
- au moins un outil de travail (15) comportant une extrémité latérale intérieure (16) et une extrémité latérale extérieure (17), et pouvant occuper au moins une position de travail dans laquelle l'outil de travail (15) agit sur des végétaux présents au sol, et au moins une autre position,
- un dispositif de liaison (31) par l'intermédiaire duquel un bâti (29) de l'outil de travail (15) est relié au bras support (7), ce dispositif de liaison (31) autorisant, au moins lorsque le bras support (7) est dans la configuration de travail, un premier déplacement de l'outil de travail (15) par rapport au bras support (7) au cours duquel l'extrémité latérale intérieure (16) et l'extrémité latérale extérieure (17) de l'outil de travail (15) se déplacent verticalement par rapport au bras support (7) et dans la même direction verticale par rapport à celui-ci, ce dispositif de liaison (31) comportant des moyens permettant d'opérer un deuxième déplacement de l'outil de travail (15) par rapport au bras support (7), ce deuxième déplacement étant transversal à la direction d'avancement (A) et sensiblement horizontal en considérant le bras support (7) dans la configuration de travail, et les moyens permettant d'opérer ce deuxième déplacement indépendamment du premier déplacement de l'outil de travail (15) par rapport au bras support (7),
***caractérisée en ce que*** le dispositif de liaison (31) comporte au moins un bras (32) orienté essentiellement dans la direction d'avancement (A) lorsque le bras support (7) est en configuration de travail, que ce bras (32) est articulé au bras support (7) autour d'un premier axe (33) qui est orienté transversalement à la direction d'avancement (A) et sensiblement horizontalement lorsque le bras support (7) est en configuration de travail, et que ce bras (32) peut, par pivotement autour de ce premier axe (33), se déplacer verticalement par rapport au bras support (7) en configuration de travail, de sorte que l'outil de travail (15) puisse se déplacer verticalement par rapport audit bras support (7).

2. Machine selon la revendication 1, ***caractérisée en ce que*** le bras (32) est articulé au bras support (7) et au bâti (29) de l'outil de travail (15) autour de premiers axes (33) respectifs qui sont orientés transversalement à la direction d'avancement (A) et sensiblement horizontalement lorsque le bras support (7) est en configuration de travail, et que ce bras (32) peut, par pivotement autour d'au moins un de ces premiers axes (33), se déplacer verticalement par rapport au bras support (7) en configuration de travail, de sorte que l'outil de travail (15) puisse se déplacer verticalement par rapport audit bras support (7).

3. Machine selon la revendication 1, ***caractérisée en ce que*** les moyens comportent un deuxième axe (34) orienté sensiblement perpendiculairement au premier axe (33) et, dans la configuration de travail du bras support (7), sensiblement verticalement, et que le bras (32) est articulé au bras support (7) autour de ce deuxième axe (34).

4. Machine selon la revendication 3, ***caractérisée en ce que*** les moyens comportent des deuxièmes axes (34) orientés sensiblement perpendiculairement au premier axe (33) et, dans la configuration de travail du bras support (7), sensiblement verticalement, et que le bras (32) est articulé au bras support (7) et au bâti (29) de l'outil de travail (15) autour de ces deuxièmes axes (34) respectifs.

5. Machine selon l'une quelconque des revendications 1 à 4, ***caractérisée en ce que*** le dispositif de liaison (31) comporte deux bras (32) distants l'un de l'autre et non reliés l'un à l'autre.

6. Machine selon la revendication 1, ***caractérisée en ce que*** le dispositif de liaison (31) comporte un organe de liaison (36) articulé au bras support (7) autour d'un premier axe de liaison (37) orienté transversalement à la direction d'avancement (A) et sensiblement horizontalement lorsque le bras support (7) est en configuration de travail, et que l'organe de liaison (36) peut, par pivotement autour de ce premier axe de liaison (37), se déplacer verticalement par rapport au bras support (7) en configuration de travail.

7. Machine selon la revendication 6, ***caractérisée en ce que*** l'organe de liaison (36) est articulé au bras support (7) et au bâti (29) de l'outil de travail (15) autour de premiers axes de liaison (37) respectifs orientés transversalement à la direction d'avancement (A) et sensiblement horizontalement lorsque le bras support (7) est en configuration de travail, et que l'organe de liaison (36) peut, par pivotement autour d'au moins un de ces premiers axes de liaison (37), se déplacer verticalement par rapport au bras support (7) en configuration de travail.

8. Machine selon la revendication 6, ***caractérisée en ce que*** les moyens comportent un deuxième axe de liaison (38) orienté sensiblement perpendiculairement au premier axe de liaison (37) et, dans la configuration de travail du bras support (7), sensiblement verticalement, et que l'organe de liaison (36) est articulé au bras support (7) autour de ce deuxième axe de liaison (38).

9. Machine selon la revendication 8, ***caractérisée en ce que*** les moyens comportent des deuxièmes axes de liaison (38) orientés sensiblement perpendiculairement au premier axe de liaison (37) et, dans la configuration de travail du bras support (7), sensiblement verticalement, et que l'organe de liaison (36) est articulé au bras support (7) et au bâti (29) de l'outil de travail (15) autour de ces deuxièmes axes de liaison (38) respectifs.

10. Machine selon la revendication 1, ***caractérisée en ce que*** les moyens comportent un premier actionneur (39) qui permet de déplacer l'outil de travail (15) par rapport au bras support (7), transversalement à la direction d'avancement (A), entre une première position transversale par rapport au bras support (7), dans laquelle l'extrémité latérale intérieure (16) de l'outil de travail (15) est rapprochée d'un premier plan (P1) vertical médian du châssis (2), et une deuxième position transversale par rapport au bras support (7), dans laquelle cette extrémité latérale intérieure (16) est éloignée de ce premier plan (P1) vertical médian.

11. Machine selon la revendication 10, ***caractérisée en ce que*** l'outil de travail (15) peut occuper une première position de travail obtenue par le positionnement du bras support (7) dans la configuration de travail et par le positionnement de l'outil de travail (15) dans la première position transversale par rapport au bras support (7), et que dans cette première position de travail, l'extrémité latérale intérieure (16) de l'outil de travail (15) se situe sensiblement dans le premier plan (P1) vertical médian du châssis (2).

12. Machine selon la revendication 10, ***caractérisée en ce que*** l'outil de travail (15) peut occuper une deuxième position de travail obtenue par le positionnement du bras support (7) dans la configuration de travail et par le positionnement de l'outil de travail (15) dans la deuxième position transversale par rapport au bras support (7).

13. Machine selon la revendication 10, ***caractérisée en ce que*** le premier actionneur (39) relie deux éléments parmi le bras (32), le dispositif de liaison (31) et le bâti (29) de l'outil de travail (15).

14. Machine selon la revendication 5, ***caractérisée en ce que*** l'outil de travail (15) comporte un deuxième plan (P2) vertical médian situé à mi-distance des extrémités latérales intérieure et extérieure (16 et 17), qu'un bras (32) est situé entre l'extrémité latérale intérieure (16) et le deuxième plan (P2) vertical médian, et que l'autre bras (32) est situé entre le deuxième plan (P2) vertical médian et l'extrémité latérale extérieure (17).

15. Machine selon la revendication 6, ***caractérisée en ce que*** l'organe de liaison (36) comporte une barre (41).

16. Machine selon l'une quelconque des revendications 1 à 5 et la revendication 6, ***caractérisée en ce que*** l'organe de liaison (36) et l'un au moins des bras (32) se situent dans des plans respectifs qui sont verticalement distants l'un de l'autre lorsque le bras support (7) est dans la configuration de travail.

17. Machine selon la revendication 1, ***caractérisée en ce qu'**au* moins un deuxième actionneur (42) relie deux éléments parmi le bras support (7), le dispositif de liaison (31) et le bâti (29) de l'outil de travail (15), que le deuxième actionneur (42) permet d'opérer un déplacement de l'outil de travail (15) par rapport au bras support (7) vers au moins une position relevée de l'outil de travail (15) par rapport au bras support (7), dans laquelle l'outil de travail (15) est distant du sol, et que ce déplacement comporte une composante verticale.

18. Machine selon la revendication 17, ***caractérisée en ce que*** dans la configuration de travail du bras support (7) et dans la position relevée de l'outil de travail (15) par rapport au bras support (7), les extrémités latérales intérieure et extérieure (16 et 17) de l'outil de travail (15) sont situées sensiblement à la même hauteur au-dessus du sol.

19. Machine selon la revendication 17, ***caractérisée en ce que*** dans la configuration de travail du bras support (7) et dans la position relevée de l'outil de travail (15) par rapport au bras support (7), l'outil de travail (15) s'étend sensiblement perpendiculairement à la direction d'avancement (A).

20. Machine selon la revendication 17, ***caractérisée en ce que*** le deuxième actionneur (42) permet de déplacer l'outil de travail (15), par rapport au bras support (7), de la position de travail de l'outil de travail (15) vers la position relevée de l'outil de travail (15) par rapport au bras support (7).

21. Machine selon les revendications 10 et 17, ***caractérisée en ce que*** l'outil de travail (15) peut occuper une première position relevée par rapport au bras support (7) obtenue par le positionnement transversal de l'outil de travail (15) dans la première position transversale par rapport au bras support (7).

22. Machine selon les revendications 10 et 17, ***caractérisée en ce que*** l'outil de travail (15) peut occuper une deuxième position relevée par rapport au bras support (7) obtenue par le positionnement transversal de l'outil de travail (15) dans la deuxième position transversale par rapport au bras support (7).

23. Machine selon les revendications 21 et 22, ***caractérisée en ce que*** l'outil de travail (15) peut occuper les première et deuxième positions relevées par rapport au bras support (7) lorsque ce dernier est dans la configuration de travail.

24. Machine selon la revendication 17, ***caractérisée en ce que*** le deuxième actionneur (42) comporte un moyen d'allégement de l'outil de travail (15) au sol.

25. Machine selon la revendication 1, ***caractérisée en ce que*** l'outil de travail (15) s'étend, dans sa position de travail, essentiellement dans un plan sensiblement horizontal, que l'outil de travail (15) est déplaçable entre cette position de travail et une position de transport dans laquelle il s'étend essentiellement dans un plan sensiblement parallèle à la direction d'avancement (A), et qu'un troisième actionneur (11) disposé entre le bras support (7) et le châssis (2) permet d'opérer un déplacement du bras support (7), par rapport au châssis (2), vers une configuration intermédiaire par rapport au châssis, située entre la configuration de travail et la configuration de transport.

26. Machine selon la revendication 25, ***caractérisée en ce que*** dans la configuration intermédiaire du bras support (7), une extrémité extérieure (14) du bras support (7) se situe à une hauteur au-dessus du sol plus importante qu'une extrémité intérieure (13).

27. Machine selon les revendications 17 et 25, ***caractérisée en ce que*** l'outil de travail (15) peut occuper la au moins une position relevée par rapport au bras support (7) lorsque ce dernier est dans la configuration intermédiaire.

28. Machine selon la revendication 27, ***caractérisée en ce que*** dans la au moins une position relevée de l'outil de travail (15) par rapport au bras support (7) dans la configuration intermédiaire, l'extrémité latérale extérieure (17) de l'outil de travail (15) se situe à une hauteur au-dessus du sol plus importante que l'extrémité latérale intérieure (16).

29. Machine selon la revendication 25, ***caractérisée en ce que*** l'extrémité latérale intérieure (16) de l'outil de travail (15) se situe à une hauteur au-dessus du sol plus importante dans la configuration intermédiaire du bras support (7) que dans la configuration de travail du bras support (7) par rapport au châssis (2).

30. Machine selon la revendication 25, ***caractérisée en ce que*** dans la configuration intermédiaire du bras support (7) par rapport au châssis (2), l'outil de travail (15) s'étend de manière oblique par rapport à un plan vertical perpendiculaire à la direction d'avancement (A).

31. Machine selon les revendications 21, 22 et 25, ***caractérisée en ce que*** l'outil de travail (15) peut occuper les première et deuxième positions relevées par rapport au bras support (7) lorsque ce dernier est dans la configuration intermédiaire.

32. Machine selon la revendication 1, ***caractérisée en ce que*** le bras support (7) est déplacé de sa configuration de travail vers sa configuration de transport par pivotement vers le haut et vers l'arrière par rapport au châssis (2).

33. Machine selon la revendication 1, ***caractérisée en ce qu'**elle* comporte deux outils de travail (15) articulés chacun au châssis (2) au moyen d'un bras support (7) respectif situé d'un côté respectif du châssis (2).

34. Machine selon les revendications 10 et 33, ***caractérisée en ce que*** lorsque chaque bras support (7) se trouve dans sa configuration de travail respective et que l'un au moins des outils de travail (15) se trouve dans la deuxième position transversale par rapport au bras support (7) correspondant, les extrémités latérales intérieures (16) de ces outils de travail (15) sont nettement écartées l'une de l'autre perpendiculairement à la direction d'avancement (A), et que, lorsque chaque bras support (7) se trouve dans sa configuration de travail respective et que chaque outil de travail (15) se trouve dans la première position transversale par rapport au bras support (7) correspondant, les extrémités latérales intérieures (16) de ces outils de travail (15) sont juxtaposées.

35. Machine selon la revendication 1, ***caractérisée en ce que*** le bâti (29) de l'outil de travail (15) supporte un dispositif de ramassage (20) comportant d'une part un rotor (22) pouvant être animé autour d'un axe de rotation (23) transversal à la direction d'avancement (A), et d'autre part des dents (24) avec des pointes de dents qui décrivent une enveloppe courbe lorsque les dents (24) sont animées, et que le bâti (29) supporte un dispositif de déplacement (21) situé à l'arrière du dispositif de ramassage (20) et qui peut être animé pour déplacer les végétaux transversalement à la direction d'avancement (A).

## Patentansprüche

1. Landwirtschaftliche Maschine für die Ernte von Pflanzen, insbesondere von Futter, wobei diese Maschine (1) in eine Vorschubrichtung (A) verschiebbar ist und
- ein Chassis (2),
- mindestens einen Stützarm (7), der am Chassis (2) angelenkt ist und in Bezug auf das Chassis (2) zwischen einer Arbeitskonfiguration, in der sich der Stützarm (7) seitlich in Bezug auf das Chassis (2) erstreckt, und einer Transportkonfiguration verschiebbar ist, in der der Stützarm (7) so zusammengeklappt ist, dass seine Abmessung senkrecht zur Vorschubrichtung (A) verringert wird,
- mindestens ein Arbeitswerkzeug (15), das ein inneres seitliches Ende (16) und ein äußeres seitliches Ende (17) umfasst und mindestens eine Arbeitsstellung, in der das Arbeitswerkzeug (15) auf die auf dem Boden vorhandenen Pflanzen einwirkt, und mindestens eine andere Stellung einnehmen kann,
- eine Verbindungsvorrichtung (31), mittels derer ein Gestell (29) des Arbeitswerkzeugs (15) mit dem Stützarm (7) verbunden wird, wobei diese Verbindungsvorrichtung (31), zumindest wenn sich der Stützarm (7) in der Arbeitskonfiguration befindet, eine erste Verschiebung des Arbeitswerkzeugs (15) in Bezug auf den Stützarm (7) zulässt, währenddessen sich das innere seitliche Ende (16) und das äußere seitliche Ende (17) des Arbeitswerkzeugs (15) vertikal in Bezug auf den Stützarm (7) und in die gleiche vertikale Richtung in Bezug auf diesen verschieben, wobei diese Verbindungsvorrichtung (31) Mittel umfasst, die es ermöglichen, eine zweite Verschiebung des Arbeitswerkzeugs (15) in Bezug auf den Stützarm (7) auszuführen, wobei diese zweite Verschiebung quer zur Vorschubrichtung (A) und im Wesentlichen horizontal unter Berücksichtigung des Stützarms (7) in Arbeitskonfiguration verläuft, und wobei es die Mittel ermöglichen, diese zweite Verschiebung unabhängig von der ersten Verschiebung des Arbeitswerkzeugs (15) in Bezug auf den Stützarm (7) auszuführen,
umfasst, ***dadurch gekennzeichnet,* dass** die Verbindungsvorrichtung (31) mindestens einen Arm (32) umfasst, der im Wesentlichen in Vorschubrichtung (A) ausgerichtet ist, wenn sich der Stützarm (7) in Arbeitskonfiguration befindet, dass dieser Arm (32) am Stützarm (7) um eine erste Achse (33) angelenkt ist, die quer zur Vorschubrichtung (A) und im Wesentlichen horizontal ausgerichtet ist, wenn sich der Stützarm (7) in Arbeitskonfiguration befindet, und dass sich dieser Arm (32) durch Schwenken um diese erste Achse (33) vertikal in Bezug auf den Stützarm (7) in Arbeitskonfiguration verschieben kann, so dass sich das Arbeitswerkzeug (15) vertikal in Bezug auf den Stützarm (7) verschieben kann.

2. Maschine nach Anspruch 1, ***dadurch gekennzeichnet,* dass** der Arm (32) am Stützarm (7) und am Gestell (29) des Arbeitswerkzeugs (15) um jeweilige erste Achsen (33) angelenkt ist, die quer zur Vorschubrichtung (A) und im Wesentlichen horizontal ausgerichtet sind, wenn sich der Stützarm (7) in Arbeitskonfiguration befindet, und dass sich dieser Arm (32) durch Schwenken um mindestens eine dieser ersten Achsen (33) vertikal in Bezug auf den Stützarm (7) in Arbeitskonfiguration verschieben kann, so dass sich das Arbeitswerkzeug (15) vertikal in Bezug auf den Stützarm (7) verschieben kann.

3. Maschine nach Anspruch 1, ***dadurch gekennzeichnet,* dass** die Mittel eine zweite Achse (34) umfassen, die im Wesentlichen senkrecht zur ersten Achse (33) und, in der Arbeitskonfiguration des Stützarms (7), im Wesentlichen vertikal ausgerichtet ist, und dass der Arm (32) am Stützarm (7) um diese zweite Achse (34) angelenkt ist.

4. Maschine nach Anspruch 3, ***dadurch gekennzeichnet,* dass** die Mittel zweite Achsen (34) umfassen, die im Wesentlichen senkrecht zur ersten Achse (33) und, in der Arbeitskonfiguration des Stützarms (7), im Wesentlichen vertikal ausgerichtet sind, und dass der Arm (32) am Stützarm (7) und am Gestell (29) des Arbeitswerkzeugs (15) um diese jeweiligen zweiten Achsen (34) angelenkt ist.

5. Maschine nach irgend einem der Ansprüche 1 bis 4, ***dadurch gekennzeichnet,* dass** die Verbindungsvorrichtung (31) zwei Arme (32) umfasst, die voneinander beabstandet und nicht miteinander verbunden sind.

6. Maschine nach Anspruch 1, ***dadurch gekennzeichnet,* dass** die Verbindungsvorrichtung (31) ein Verbindungsmittel (36) umfasst, das am Stützarm (7) um eine erste Verbindungsachse (37) angelenkt ist, die quer zur Vorschubrichtung (A) und im Wesentlichen horizontal ausgerichtet ist, wenn sich der Stützarm (7) in Arbeitskonfiguration befindet, und dass sich das Verbindungsmittel (36) durch Schwenken um diese erste Verbindungsachse (37) vertikal in Bezug auf den Stützarm (7) in Arbeitskonfiguration verschieben kann.

7. Maschine nach Anspruch 6, ***dadurch gekennzeichnet,* dass** das Verbindungsmittel (36) am Stützarm (7) und am Gestell (29) des Arbeitswerkzeugs (15) um jeweilige erste Verbindungsachsen (37) angelenkt ist, die quer zur Vorschubrichtung (A) und im Wesentlichen horizontal ausgerichtet sind, wenn sich der Stützarm (7) in Arbeitskonfiguration befindet, und dass sich das Verbindungsmittel (36) durch Schwenken um mindestens eine dieser ersten Verbindungsachsen (37) vertikal in Bezug auf den Stützarm (7) in Arbeitskonfiguration verschieben kann.

8. Maschine nach Anspruch 6, ***dadurch gekennzeichnet,* dass** die Mittel eine zweite Verbindungsachse (38) umfassen, die im Wesentlichen senkrecht zur ersten Verbindungsachse (37) und, in der Arbeitskonfiguration des Stützarms (7), im Wesentlichen vertikal ausgerichtet ist, und dass das Verbindungsmittel (36) am Stützarm (7) um diese zweite Verbindungsachse (38) angelenkt ist.

9. Maschine nach Anspruch 8, ***dadurch gekennzeichnet,* dass** die Mittel zweite Verbindungsachsen (38) umfassen, die im Wesentlichen senkrecht zur ersten Verbindungsachse (37) und, in der Arbeitskonfiguration des Stützarms (7), im Wesentlichen vertikal ausgerichtet sind, und dass das Verbindungsmittel (36) am Stützarm (7) und am Gestell (29) des Arbeitswerkzeugs (15) um diese jeweiligen zweiten Verbindungsachsen (38) angelenkt ist.

10. Maschine nach Anspruch 1, ***dadurch gekennzeichnet,* dass** die Mittel ein erstes Betätigungselement (39) umfassen, das es ermöglicht, das Arbeitswerkzeug (15) in Bezug auf den Stützarm (7) quer zur Vorschubrichtung (A) zwischen einer ersten quer verlaufenden Stellung in Bezug auf den Stützarm (7), in der das innere seitliche Ende (16) des Arbeitswerkzeugs (15) einer ersten vertikalen Mittelebene (P1) des Chassis (2) angenähert ist, und einer zweiten quer verlaufenden Stellung in Bezug auf den Stützarm (7), in der dieses innere seitliche Ende (16) von dieser ersten vertikalen Mittelebene (P1) entfernt ist, zu verschieben.

11. Maschine nach Anspruch 10, ***dadurch gekennzeichnet,* dass** das Arbeitswerkzeug (15) eine erste Arbeitsstellung einnehmen kann, die man durch Positionieren des Stützarms (7) in die Arbeitskonfiguration und durch Positionieren des Arbeitswerkzeugs (15) in die erste Querstellung in Bezug auf den Stützarm (7) erhält, und dass sich in dieser ersten Arbeitsstellung das innere seitliche Ende (16) des Arbeitswerkzeugs (15) im Wesentlichen in der ersten vertikalen Mittelebene (P1) des Chassis (2) befindet.

12. Maschine nach Anspruch 10, ***dadurch gekennzeichnet,* dass** das Arbeitswerkzeug (15) eine zweite Arbeitsstellung einnehmen kann, die man durch Positionieren des Stützarms (7) in die Arbeitskonfiguration und durch Positionieren des Arbeitswerkzeugs (15) in die zweite Querstellung in Bezug auf den Stützarm (7) erhält.

13. Maschine nach Anspruch 10, ***dadurch gekennzeichnet,* dass** das erste Betätigungselement (39) zwei Elemente aus Arm (32), Verbindungsvorrichtung (31) und Gestell (29) des Arbeitswerkzeugs (15) verbindet.

14. Maschine nach Anspruch 5, ***dadurch gekennzeichnet,* dass** das Arbeitswerkzeug (15) eine zweite vertikale Mittelebene (P2) umfasst, die sich auf halber Distanz vom inneren und äußeren seitlichen Ende (16 und 17) befindet, dass sich ein Arm (32) zwischen dem inneren seitlichen Ende (16) und der zweiten vertikalen Mittelebene (P2) befindet, und dass sich der andere Arm (32) zwischen der zweiten vertikalen Mittelebene (P2) und dem äußeren seitlichen Ende (17) befindet.

15. Maschine nach Anspruch 6, ***dadurch gekennzeichnet,* dass** das Verbindungsmittel (36) eine Stange (41) umfasst.

16. Maschine nach irgend einem der Ansprüche 1 bis 5 und Anspruch 6, ***dadurch gekennzeichnet,* dass** sich das Verbindungsmittel (36) und mindestens einer der Arme (32) in jeweiligen Ebenen befinden, die vertikal voneinander beabstandet sind, wenn sich der Stützarm (7) in der Arbeitskonfiguration befindet.

17. Maschine nach Anspruch 1, ***dadurch gekennzeichnet,* dass** mindestens ein zweites Betätigungselement (42) zwei Elemente aus Stützarm (7), Verbindungsvorrichtung (31) und Gestell (29) des Arbeitswerkzeugs (15) verbindet, dass es das zweite Betätigungselement (42) ermöglicht, eine Verschiebung des Arbeitswerkzeugs (15) in Bezug auf den Stützarm (7) in mindestens eine angehobene Stellung des Arbeitswerkzeugs (15) in Bezug auf den Stützarm (7) auszuführen, in der das Arbeitswerkzeug (15) vom Boden beabstandet ist, und dass diese Verschiebung eine vertikale Komponente umfasst.

18. Maschine nach Anspruch 17, ***dadurch gekennzeichnet,* dass** sich in der Arbeitskonfiguration des Stützarms (7) und in der angehobenen Stellung des Arbeitswerkzeugs (15) in Bezug auf den Stützarm (7) das innere und äußere seitliche Ende (16 und 17) des Arbeitswerkzeugs (15) im Wesentlichen auf gleicher Höhe über dem Boden befinden.

19. Maschine nach Anspruch 17, ***dadurch gekennzeichnet,* dass** sich in der Arbeitskonfiguration des Stützarms (7) und in der angehobenen Stellung des Arbeitswerkzeugs (15) in Bezug auf den Stützarm (7) das Arbeitswerkzeug (15) im Wesentlichen senkrecht zur Vorschubrichtung (A) erstreckt.

20. Maschine nach Anspruch 17, ***dadurch gekennzeichnet,* dass** es das zweite Betätigungselement (42) ermöglicht, das Arbeitswerkzeug (15) in Bezug auf den Stützarm (7) von der Arbeitsstellung des Arbeitswerkzeugs (15) in die angehobene Stellung des Arbeitswerkzeugs (15) in Bezug auf den Stützarm (7) zu verschieben.

21. Maschine nach Anspruch 10 und 17, ***dadurch gekennzeichnet,* dass** das Arbeitswerkzeug (15) eine erste angehobene Stellung in Bezug auf den Stützarm (7) einnehmen kann, die man durch quer verlaufendes Positionieren des Arbeitswerkzeugs (15) in die erste Querstellung in Bezug auf den Stützarm (7) erhält.

22. Maschine nach Anspruch 10 und 17, ***dadurch gekennzeichnet,* dass** das Arbeitswerkzeug (15) eine zweite angehobene Stellung in Bezug auf den Stützarm (7) einnehmen kann, die man durch quer verlaufendes Positionieren des Arbeitswerkzeugs (15) in die zweite Querstellung in Bezug auf den Stützarm (7) erhält.

23. Maschine nach Anspruch 21 und 22, ***dadurch gekennzeichnet,* dass** das Arbeitswerkzeug (15) die erste und zweite angehobene Stellung in Bezug auf den Stützarm (7) einnehmen kann, wenn sich Letzterer in der Arbeitskonfiguration befindet.

24. Maschine nach Anspruch 17, ***dadurch gekennzeichnet,* dass** das zweite Betätigungselement (42) ein Entlastungsmittel des Arbeitswerkzeugs (15) am Boden umfasst.

25. Maschine nach Anspruch 1, ***dadurch gekennzeichnet,* dass** sich das Arbeitswerkzeug (15) in seiner Arbeitsstellung im Wesentlichen in einer im Wesentlichen horizontalen Ebene erstreckt, dass das Arbeitswerkzeug (15) zwischen dieser Arbeitsstellung und einer Transportstellung verschiebbar ist, in der es sich im Wesentlichen in einer Ebene erstreckt, die im Wesentlichen parallel zur Vorschubrichtung (A) verläuft, und dass ein drittes Betätigungselement (11), das zwischen dem Stützarm (7) und dem Chassis (2) angeordnet ist, es ermöglicht, eine Verschiebung des Stützarms (7), in Bezug auf das Chassis (2), in eine Zwischenkonfiguration in Bezug auf das Chassis auszuführen, die sich zwischen der Arbeitskonfiguration und der Transportkonfiguration befindet.

26. Maschine nach Anspruch 25, ***dadurch gekennzeichnet,* dass** sich in der Zwischenkonfiguration des Stützarms (7) ein äußeres Ende (14) des Stützarms (7) auf einer größeren Höhe über dem Boden befindet als ein inneres Ende (13).

27. Maschine nach Anspruch 17 und 25, ***dadurch gekennzeichnet,* dass** das Arbeitswerkzeug (15) die mindestens eine angehobene Stellung in Bezug auf den Stützarm (7) einnehmen kann, wenn sich Letzterer in der Zwischenkonfiguration befindet.

28. Maschine nach Anspruch 27, ***dadurch gekennzeichnet,* dass** sich in der mindestens einen angehobenen Stellung des Arbeitswerkzeugs (15) in Bezug auf den Stützarm (7) in Zwischenkonfiguration das äußere seitliche Ende (17) des Arbeitswerkzeugs (15) auf einer größeren Höhe über dem Boden befindet als das innere seitliche Ende (16).

29. Maschine nach Anspruch 25, ***dadurch gekennzeichnet,* dass** sich das innere seitliche Ende (16) des Arbeitswerkzeugs (15) in der Zwischenkonfiguration des Stützarms (7) auf einer größeren Höhe über dem Boden befindet als in der Arbeitskonfiguration des Stützarms (7) in Bezug auf das Chassis (2).

30. Maschine nach Anspruch 25, ***dadurch gekennzeichnet,* dass** sich in der Zwischenkonfiguration des Stützarms (7) in Bezug auf das Chassis (2) das Arbeitswerkzeug (15) schräg in Bezug auf eine vertikale Ebene senkrecht zur Vorschubrichtung (A) erstreckt.

31. Maschine nach Anspruch 21, 22 und 25, ***dadurch gekennzeichnet,* dass** das Arbeitswerkzeug (15) die erste und zweite angehobene Stellung in Bezug auf den Stützarm (7) einnehmen kann, wenn sich Letzterer in der Zwischenkonfiguration befindet.

32. Maschine nach Anspruch 1, ***dadurch gekennzeichnet,* dass** der Stützarm (7) von seiner Arbeitskonfiguration in seine Transportkonfiguration durch Schwenken nach oben und nach hinten in Bezug auf das Chassis (2) verschoben wird.

33. Maschine nach Anspruch 1, ***dadurch gekennzeichnet,* dass** sie zwei Arbeitswerkzeuge (15) umfasst, die jeweils am Chassis (2) mittels eines jeweiligen Stützarms (7) angelenkt sind, der sich auf einer jeweiligen Seite des Chassis (2) befindet.

34. Maschine nach Anspruch 10 und 33, ***dadurch gekennzeichnet,* dass**, wenn sich jeder Stützarm (7) in seiner jeweiligen Arbeitskonfiguration befindet und sich mindestens eines der Arbeitswerkzeuge (15) in der zweiten quer verlaufenden Stellung in Bezug auf den entsprechenden Stützarm (7) befindet, die inneren seitlichen Enden (16) dieser Arbeitswerkzeuge (15) deutlich voneinander senkrecht zur Vorschubrichtung (A) beabstandet sind, und dass, wenn sich jeder Stützarm (7) in seiner jeweiligen Arbeitskonfiguration befindet und sich jedes Arbeitswerkzeug (15) in der ersten quer verlaufenden Stellung in Bezug auf den entsprechenden Stützarm (7) befindet, die inneren seitlichen Enden (16) dieser Arbeitswerkzeuge (15) nebeneinander liegen.

35. Maschine nach Anspruch 1, ***dadurch gekennzeichnet,* dass** das Gestell (29) des Arbeitswerkzeugs (15) eine Sammelvorrichtung (20) trägt, die einerseits einen Rotor (22) umfasst, der um eine Drehachse (23) quer zur Vorschubrichtung (A) angetrieben werden kann, und andererseits Zähne (24) mit Zahnspitzen, die eine gekrümmte Bahn beschreiben, wenn die Zähne (24) angetrieben werden, und dass das Gestell (29) eine Fördervorrichtung (21) trägt, die sich hinter der Sammelvorrichtung (20) befindet und die angetrieben werden kann, um die Pflanzen quer zur Vorschubrichtung (A) zu befördern.

## Claims

1. Agricultural machine for the harvesting of plants, in particular of fodder, this machine (1) being movable in a direction of advance (A) and comprising:
- a chassis (2),
- at least one support arm (7) articulated on the chassis (2) and movable with respect to the chassis (2) between a work configuration in which the support arm (7) extends laterally with respect to the chassis (2), and a transport configuration in which the support arm (7) is folded such that its overall dimension perpendicularly to the direction of advance (A) is reduced,
- at least one work tool (15) comprising an inner lateral end (16) and an outer lateral end (17), and being able to occupy at least one work position in which the work tool (15) acts on plants lying on the ground, and at least another position,
- a connecting device (31), by means of which a frame (29) of the work tool (15) is connected to the support arm (7), this connecting device (31) allowing, at least when the support arm (7) is in the work configuration, a first movement of the work tool (15) with respect to the support arm (7) during which the inner lateral end (16) and the outer lateral end (17) of the work tool (15) move vertically with respect to the support arm (7) and in the same vertical direction with respect thereto, this connecting device (31) allowing a second movement of the work tool (15) to be operated with respect to the support arm (7), this second movement being transverse to the direction of advance (A) and substantially horizontal considering the support arm (7) in the work configuration, and the means making it possible to operate this second movement independently of the first movement of the work tool (15) with respect to the support arm (7),
***characterized in* that** the connecting device (31) comprises at least one arm (32) oriented essentially in the direction of advance (A) when the support arm (7) is in the work configuration, that this arm (32) is articulated on the support arm (7) about a first axis (33) which is oriented transversely to the direction of advance (A) and substantially horizontally when the support arm (7) is in the work configuration, and that this arm (32) can, by pivoting about this first axis (33), move vertically with respect to the support arm (7) in the work configuration, such that the work tool (15) can move vertically with respect to the said support arm (7).

2. Machine according to Claim 1, ***characterized in* that** the arm (30) is articulated on the support arm (7) and on the frame (29) of the work tool (15) about respective first axes (33) which are oriented transversely to the direction of advance (A) and substantially horizontally when the support arm (7) is in the work configuration, and that this arm (32) can, by pivoting about at least one of these first axes (33), move vertically with respect to the support arm (7) in work configuration, such that the work tool (15) can move vertically with respect to the said support arm (7).

3. Machine according to Claim 1, ***characterized in* that** the means comprise a second axis (34) oriented substantially perpendicularly to the first axis (33) and, in the work configuration of the support arm (7), substantially vertically, and that the arm (32) is articulated on the support arm (7) about this second axis (34).

4. Machine according to Claim 3, ***characterized in* that** the means comprise second axes (34) oriented substantially perpendicularly to the first axis (33) and, in the work configuration of the support arm (7), substantially vertically, and that the arm (32) is articulated on the support arm (7) and on the frame (29) of the work tool (15) about these respective second axes (34).

5. Machine according to any one of Claims 1 to 4, ***characterized in* that** the connecting device (31) comprises two arms (32) distant from one another and not connected to one another.

6. Machine according to Claim 1, ***characterized in* that** the connecting device (31) comprises a connecting element (36) articulated on the support arm (7) about a first connecting axis (37) oriented transversely to the direction of advance (A) and substantially horizontally when the support arm (7) is in the work configuration, and that the connecting element (36) can, by pivoting about this first connecting axis (37), move vertically with respect to the support arm (7) in the work configuration.

7. Machine according to Claim 6, ***characterized in* that** the connecting element (36) is articulated on the support arm (7) and on the frame (29) of the work tool (15) about first respective connecting axes (37) oriented transversely to the direction of advance (A) and substantially horizontally when the support arm (7) is in the work configuration, and that the connecting element (36) can, by pivoting about at least one of these first connecting axes (37), move vertically with respect to the support arm (7) in the work configuration.

8. Machine according to Claim 6, ***characterized in* that** the means comprise a second connecting axis (38) oriented substantially perpendicularly to the first connecting axis (37) and, in the work configuration of the support arm (7), substantially vertically, and that the connecting element (36) is articulated on the support arm (7) about this second connecting axis (38).

9. Machine according to Claim 8, ***characterized in* that** the means comprise second connecting axes (38) oriented substantially perpendicularly to the first connecting axis (37) and, in the work configuration of the support arm (7), substantially vertically, and that the connecting element (36) is articulated on the support arm (7) and on the frame (29) of the work tool (15) about these respective second connecting axes (38).

10. Machine according to Claim 1, ***characterized in* that** the means comprise a first actuator (39) which makes it possible to move the work tool (15) with respect to the support arm (7), transversely to the direction of advance (A), between a first transverse position with respect to the support arm (7), in which the inner lateral end (16) of the work tool (15) is brought closer to a first median vertical plane (P1) of the chassis (2), and a second transverse position with respect to the support arm (7), in which this inner lateral end (16) is distanced from this first median vertical plane (P1).

11. Machine according to Claim 10, ***characterized in* that** the work tool (15) can occupy a first work position obtained by the positioning of the support arm (7) in the work configuration and by the positioning of the work tool (15) in the first transverse position with respect to the support arm (7), and **in that** this first work position, the inner lateral end (16) of the work tool (15) is situated substantially in the first median vertical plane (P1) of the chassis (2).

12. Machine according to Claim 10, ***characterized in* that** the work tool (15) can occupy a second work position obtained by the positioning of the support arm (7) in the work configuration and by the positioning of the work tool (15) in the second transverse position with respect to the support arm (7).

13. Machine according to Claim 10, ***characterized in* that** the first actuator (39) connects two elements from among the arm (32), the connecting device (31) and the frame (29) of the work tool (15).

14. Machine according to Claim 5, ***characterized in* that** the work tool (15) comprises a second median vertical plane (P2) situated equidistant from the inner and outer lateral ends (16 and 17), that an arm (32) is situated between the inner lateral end (16) and the second median vertical plane (P2), and that the other arm (32) is situated between the second median vertical plane (P2) and the outer lateral end (17).

15. Machine according to Claim 6, ***characterized in* that** the connecting element (36) comprises a rod (41).

16. Machine according to any one of Claims 1 to 5 and Claim 6, ***characterized in* that** the connecting element (36) and at least one of the arms (32) are situated in respective planes which are vertically distant one from the other when the support arm (7) is in the work configuration.

17. Machine according to Claim 1, ***characterized in* that** at least one second actuator (42) connects two elements from among the support arm (7), the connecting device (31) and the frame (29) of the work tool (15), that the second actuator (42) makes it possible to operate a movement of the work tool (15) with respect to the support arm (7) towards at least one raised position of the work tool (15) with respect to the support arm (7), in which the work tool (15) is distant from the ground, and that this movement comprises a vertical component.

18. Machine according to Claim 17, ***characterized in* that** in the work configuration of the support arm (7) and in the raised position of the work tool (15) with respect to the support arm (7), the inner and outer lateral ends (16 and 17) of the work tool (15) are situated substantially at the same height above the ground.

19. Machine according to Claim 17, ***characterized in* that** in the work configuration of the support arm (7) and in the raised position of the work tool (15) with respect to the support arm (7), the work tool (15) extends substantially perpendicularly to the direction of advance (A).

20. Machine according to Claim 17, ***characterized in* that** the second actuator (42) makes it possible to move the work tool (15), with respect to the support arm (7), from the work position of the work tool (15) towards the raised position of the work tool (15) with respect to the support arm (7).

21. Machine according to Claims 10 and 17, ***characterized in* that** the work tool (15) can occupy a first raised position with respect to the support arm (7) obtained by the transverse positioning of the work tool (15) in the first transverse position with respect to the support arm (7).

22. Machine according to Claims 10 and 17, ***characterized in* that** the work tool (15) can occupy a second raised position with respect to the support arm (7) obtained by the transverse positioning of the work tool (15) in the second transverse position with respect to the support arm (7).

23. Machine according to Claims 21 and 22, ***characterized in* that** the work tool (15) can occupy the first and second raised positions with respect to the support arm (7) when the latter is in the work configuration.

24. Machine according to Claim 17, ***characterized in* that** the second actuator (42) comprises a lightening means for the work tool (15) on the ground.

25. Machine according to Claim 1, ***characterized in* that** the work tool (15) extends, in its work position, essentially in a substantially horizontal plane, that the work tool (15) is movable between this work position and a transport position, in which it extends essentially in a plane substantially parallel to the direction of advance (A), and that a third actuator (11) arranged between the support arm (7) and the chassis (2) makes it possible to operate a movement of the support arm (7), with respect to the chassis (2), towards an intermediate configuration with respect to the chassis, situated between the work configuration and the transport configuration.

26. Machine according to Claim 25, ***characterized in* that** in the intermediate configuration of the support arm (7), an outer end (14) of the support arm (7) is situated at a greater height above the ground than an inner end (13).

27. Machine according to Claims 17 and 25, ***characterized in* that** the work tool (15) can occupy the at least one raised position with respect to the support arm (7) when the latter is in the intermediate configuration.

28. Machine according to Claim 27, ***characterized in* that** in the at least one raised position of the work tool (15) with respect to the support arm (7) in the intermediate configuration, the outer lateral end (17) of the work tool (15) is situated at a greater height above the ground than the inner lateral end (16).

29. Machine according to Claim 25, ***characterized in* that** the inner lateral end (16) of the work tool (15) is situated at a greater height above the ground in the intermediate configuration of the support arm (7) than in the work configuration of the support arm (7) with respect to the chassis (2).

30. Machine according to Claim 25, ***characterized in* that** in the intermediate configuration of the support arm (7) with respect to the chassis (2), the work tool (15) extends in an oblique manner with respect to a vertical plane perpendicular to the direction of advance (A).

31. Machine according to Claims 21, 22 and 25, ***characterized in* that** the work tool (15) can occupy the first and second raised positions with respect to the support arm (7) when this latter is in the intermediate configuration.

32. Machine according to Claim 1, ***characterized in* that** the support arm (7) is moved from its work configuration towards its transport configuration by pivoting upwards and towards the rear with respect to the chassis (2).

33. Machine according to Claim 1, ***characterized in* that** it comprises two work tools (15) each articulated on the chassis (2) by means of a respective support arm (7) situated on a respective side of the chassis (2).

34. Machine according to Claims 10 and 33, ***characterized in* that** when each support arm (7) is in its respective work configuration and at least one of the work tools (15) is in the second transverse position with respect to the corresponding support arm (7), the inner lateral ends (16) of these work tools (15) are distinctly spaced from one another perpendicularly to the direction of advance (A), and that, when each support arm (7) is in its respective work configuration and that each work tool (15) is in the first transverse position with respect to the corresponding support arm (7), the inner lateral ends (16) of these work tools (15) are juxtaposed.

35. Machine according to Claim 1, ***characterized in* that** the frame (29) of the work tool (15) supports a pick-up device (20) comprising on the one hand a rotor (22) being able to be driven about a rotation axis (23) transverse to the direction of advance (A), and on the other hand teeth (24) with teeth points which describe a curved envelope when the teeth (24) are driven, and that the frame (29) supports a conveying device (21) situated at the rear of the pick-up device (20) and which can be driven for moving the plants transversely to the direction of advance (A).
